# EUROPEAN PATENT APPLICATION

(11) **EP 3 065 334 A1**
(43) Date of publication of application: **07.09.2016**
(21) Application number: 13896341.8
(22) Date of filing: 30.10.2013
(51) Int. Cl.: H04L 9/14

(54) **KEY CONFIGURATION METHOD, SYSTEM AND APPARATUS**

(71) Applicant: Huawei Device Co., Ltd., Shenzhen, Guangdong 518129 (CN)
(72) Inventor: PANG, Gaokun, Shenzhen Guangdong 518129 (CN); DING, Zhiming, Shenzhen Guangdong 518129 (CN)
(74) Representative: Pfenning, Meinig & Partner mbB
(86) International application number: PCT/CN2013/086247
(87) International publication number: WO 2015/061992

(57) **Abstract**

The present invention provides a key configuration method, system, and apparatus, where the method includes: acquiring, by the configuration device, a public key of a second device, and sending the public key of the second device to a first device; generating, by the first device, a first shared key, and sending information for obtaining the first shared key to the second device by using the public key of the second device, or generating, by the first device, a first shared key by using the public key of the second device, and sending information for obtaining the first shared key to the second device; and generating, by the second device, the first shared key by using a private key of the second device and the information for obtaining the first shared key, where the first shared key is used for a secure connection between the first device and the second device. The present invention can improve security of an interaction between the first device and the second device.

## Description

### TECHNICAL FIELD

The present invention relates to the field of network communications technologies, and in particular, to a key configuration method, system, and apparatus.

### BACKGROUND

Since a WiFi (Wireless Fidelity, wireless fidelity) technology was published in 1997 by the wireless local area network standard IEEE802.11, under great promotion by a WIFI union formed by a large quantity of industry-leading companies, and due to advantages of the WiFi technology such as rapid deployment, ease of use, and a high transmission rate, this technology develops rapidly. The WiFi technology has been widely applied in various industries. Existing notebook computers, PDAs (Personal Digital Assistant, personal digital assistant), mobile phones, and the like all support the WiFi technology. Access points of a WiFi network are distributed in places such as hotels, coffee shops, schools, and hospitals. The WiFi technology is, so to speak, all around in life.

Development and wide application of the WiFi technology have resulted in emergence of security technical requirements related to the WiFi technology. WPA (Wi-Fi Protected Access, WiFi protected access) is a security technology used in WiFi, which requires a user to set a Credential (a credential, including an account name and a password) and other WPA-related parameters such as an encryption algorithm. However, when the user does not understand meanings of these parameters, the user does not know how to set these parameters, thereby hindering application of the WPA security technology. As a result, because the user does not know how to set the WPA parameters, the user selects using a network that lacks protection of a security mechanism. WPS (WiFi Protected Setup, WiFi protected setup) is a technology that aims to assist the user in setting the credential. WPS mainly focuses on two points: security and simpleness, that is, a configuration process should be simple and a network after the configuration should be secure. Currently, WPS mainly prevents, based on a key exchange algorithm, some attack actions such as eavesdropping and dictionary attack.

At present, there mainly includes the following two WPS-applied scenarios: In the first scenario, credential configuration is performed between a terminal serving as an enrollee (enrollee) and an AP (Access Point, access point), serving as a registrar (registrar), of a WiFi network, so that authentication can be subsequently performed based on a credential between the terminal and the AP to establish a secure connection. In the second scenario, an authentication and configuration process is performed in a P2P (Peer to Peer, peer to peer) scenario. A research on P2P in the WiFi technology aims to enable terminal devices to implement end-to-end direct discovery also by using a WiFi function in the absence of an infrastructure such as a cellular network or a hot spot; in such a scenario, one terminal serves as a client (client) and the other terminal serves as a GO (Group Owner, group owner), and key configuration is performed between the client and the GO, so that the client and the GO can perform, based on a configured key, a data interaction with each other subsequently.

The WiFi technology is gradually applied in new fields such as smart grid, a sensor network, and a medical network. A large quantity of WiFi devices are headless devices (Headless Devices), where the so-called headless device is a device without a man-machine interface, such as a display screen and a keyboard, or a device not supporting near field communication. A third-party configuration device is required for implementing a connection between these headless devices, for example, an AP is connected to a set-top box by using the configuration device or sensors are connected by using the configuration device. For such key configuration performed between two devices with the assistance of the third-party configuration device, the prior art uses the following manner:

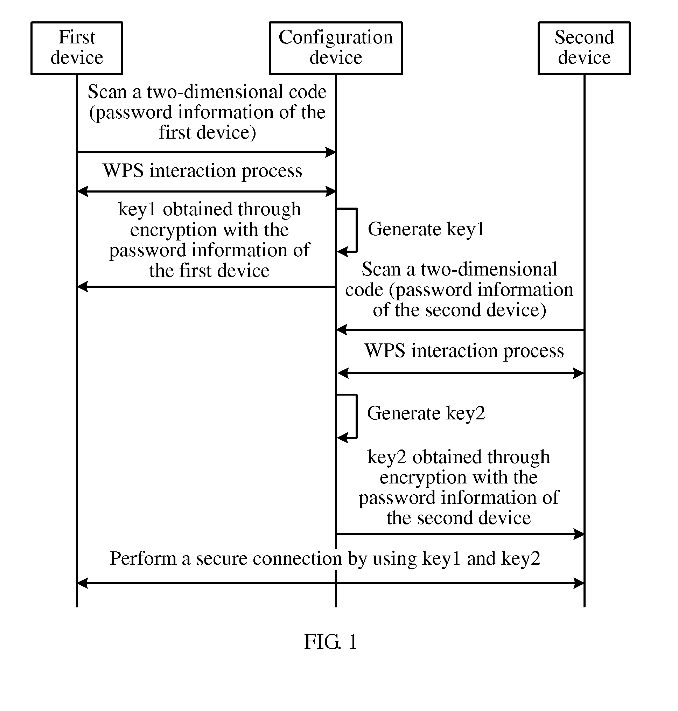

As shown in FIG. 1, the configuration device scans a two-dimensional code on a first device, acquires password information of the first device that is included in the two-dimensional code, scans a two-dimensional code on a second device, and acquires password information of the second device that is included in the two-dimensional code; the configuration device performs, based on the password information of the first device, a WPS interaction process with the first device, generates a key key1, encrypts key1 by using the password information of the first device, and then sends the encrypted key to the first device; and the configuration device performs, based on the password information of the second device, a WPS interaction process with the second device, generates a key key2, encrypts key2 by using the password information of the second device, and then sends the encrypted key to the second device. Afterwards, the first device and the second device perform, based on key1 and key2, a secure connection to each other, that is, perform an interaction based on key1 and key2.

However, the password information of the first device and the second device in the foregoing manner is in an open state, and is easily and illegally acquired. That is, any third-party device can acquire the password information, generate keys, and then send the keys to the first device and the second device, which results in easy eavesdropping on an interaction between the first device and the second device, and poor security.

### SUMMARY

In view of this, embodiments of the present invention provide a key configuration method, system, and apparatus based on a third-party configuration device, so as to improve security of an interaction between a first device and a second device.

According to a first aspect, an embodiment of the present invention provides a key configuration method, where the key configuration method includes:
receiving, by a first device, a public key of a second device that is sent by a configuration device after the configuration device acquires the public key of the second device; and sending information for obtaining a first shared key to the second device by using the public key of the second device, or generating, by the first device, a first shared key by using the public key of the second device, and sending information for obtaining the first shared key to the second device,
so that the second device generates the first shared key by using a private key of the second device and the information for obtaining the first shared key, where the first shared key is used for a secure connection between the first device and the second device.

With reference to the first aspect, in a first possible implementation manner, the sending, by the first device by using the public key of the second device, information for obtaining a first shared key to the second device includes: generating, by the first device, a password; using the password as the first shared key; encrypting the password by using the public key of the second device, to obtain an encryption result; and sending the encryption result to the second device; and
the generating, by the second device, the first shared key by using a private key of the second device and the information for obtaining the first shared key includes: decrypting, by the second device, the encryption result by using the private key of the second device, to obtain the password, and using the password as the first shared key; or
the generating, by the first device, a first shared key, and sending information for obtaining the first shared key to the second device by using the public key of the second device includes: generating, by the first device, a password; encrypting the password by using the public key of the second device, to obtain an encryption result; sending the encryption result to the second device; generating a derivation key for the password by using a key derivation algorithm; and using the derivation key as the first shared key; and
the generating, by the second device, the first shared key by using a private key of the second device and the information for obtaining the first shared key includes: decrypting, by the second device, the encryption result by using the private key of the second device, to obtain the password; generating the derivation key for the password by using the key derivation algorithm; and using the derivation key as the first shared key.

With reference to the first aspect, in a second possible implementation manner, the generating, by the first device, a first shared key, and sending information for obtaining the first shared key to the second device by using the public key of the second device includes: generating, by the first device, a randomizer; generating the first shared key by using information agreed by the first device and the second device and the randomizer; encrypting the randomizer by using the public key of the second device, and then sending an encryption result to the second device; and
the generating, by the second device, the first shared key by using a private key of the second device and the information for obtaining the first shared key includes: decrypting, by the second device, the encryption result by using the private key of the second device, to obtain the randomizer; and generating the first shared key by using the information agreed by the first device and the second device and the randomizer.

With reference to the first aspect, in a third possible implementation manner, the sending information for obtaining the first shared key to the second device by using the public key of the second device includes: encrypting, by the first device, a public key of the first device by using the public key of the second device, and then sending an encryption result to the second device;
the generating, by the second device, the first shared key by using a private key of the second device and the information for obtaining the first shared key includes: decrypting, by the second device, the encryption result by using the private key of the second device, to obtain the public key of the first device; generating a password; and using the password as the first shared key; and
the method further includes: receiving, by the first device, an encryption result that is obtained after the second device encrypts the password by using the public key of the first device; decrypting the received encryption result by using a private key of the first device; and using an obtained password as the first shared key.

With reference to the first aspect, in a fourth possible implementation manner, the method further includes: pre-agreeing, by the first device and the second device, a key exchange algorithm;
the generating, by the first device, a first shared key by using the public key of the second device, and sending information for obtaining the first shared key to the second device includes: generating, by the first device, the first shared key according to the key exchange algorithm by using the public key of the second device and a private key of the first device; and sending a public key of the first device to the second device; and
the generating, by the second device, the first shared key by using a private key of the second device and the information for obtaining the first shared key includes: generating, by the second device, the first shared key according to the key exchange algorithm by using the private key of the second device and the public key of the first device.

With reference to the fourth possible implementation manner of the first aspect, in a fifth possible implementation manner, the pre-agreeing, by the first device and the second device, a key exchange algorithm includes:
pre-configuring, in the first device and the second device, a parameter used by the key exchange algorithm; or
sending, by the configuration device, a parameter used by the key exchange algorithm to the first device and the second device.

With reference to the first aspect, the first possible implementation manner of the first aspect, the second possible implementation manner of the first aspect, the third possible implementation manner of the first aspect, the fourth possible implementation manner of the first aspect, or the fifth possible implementation manner of the first aspect, in a sixth possible implementation manner, the first shared key being used for a secure connection between the first device and the second device includes:
generating, by the first device, a credential after obtaining the first shared key; encrypting the credential by using the first shared key or the derivation key of the first shared key, and then sending an encryption result to the second device, so that the second device decrypts the encryption result by using the obtained first shared key or the derivation key of the first shared key, to obtain the credential, where the credential is used for a secure connection between the first device and the second device; or
decrypting, by the first device, an encryption result, sent by the second device, of a credential by using the obtained first shared key or the derivation key of the first shared key, to obtain the credential, where the encryption result of the credential is obtained after the second device obtains the first shared key, generates the credential, and then encrypts the credential by using the first shared key or the derivation key of the first shared key, where the credential is used for a secure connection between the first device and the second device.

With reference to the sixth possible implementation manner of the first aspect, in a seventh possible implementation manner, if the first device is a registrar Registrar, a central node, or a group owner GO, the first device generates the credential and sends the encryption result of the credential to the second device; or
if the second device is a Registrar, a central node, or a GO, the second device generates the credential and sends the encryption result of the credential to the first device.

With reference to the first aspect, the first possible implementation manner of the first aspect, the second possible implementation manner of the first aspect, the third possible implementation manner of the first aspect, the fourth possible implementation manner of the first aspect, or the fifth possible implementation manner of the first aspect, the sixth possible implementation manner of the first aspect, or the seventh possible implementation manner of the first aspect, in an eighth possible implementation manner, the receiving, by a first device, a public key of a second device that is sent by a configuration device after the configuration device acquires the public key of the second device is specifically:
receiving, by the first device, an encryption result that is sent by the configuration device after the configuration device acquires the public key of the second device and the public key of the first device, where the encryption result is obtained after the configuration device encrypts the public key of the second device by using the public key of the first device; and
the method further includes: decrypting, by the first device, the encryption result, to obtain the public key of the second device.

With reference to the first aspect, the first possible implementation manner of the first aspect, the second possible implementation manner of the first aspect, the third possible implementation manner of the first aspect, the fourth possible implementation manner of the first aspect, or the fifth possible implementation manner of the first aspect, the sixth possible implementation manner of the first aspect, the seventh possible implementation manner of the first aspect, or the eighth possible implementation manner of the first aspect, in a ninth possible implementation manner, the receiving, by a first device, a public key of a second device that is sent by a configuration device after the configuration device acquires the public key of the second device is specifically:
establishing, by the first device, a secure connection to the configuration device, so as to generate a second shared key; and
receiving, by the first device, an encryption result that is sent by the configuration device after the configuration device acquires the public key of the second device, where the encryption result is obtained after the configuration device encrypts the public key of the second device by using the second shared key; and
the method further includes:
   decrypting, by the first device, the received encryption result by using the second shared key, to obtain the public key of the second device.

With reference to the ninth possible implementation manner of the first aspect, in a tenth possible implementation manner, the establishing, by the first device, a secure connection to the configuration device, so as to generate a second shared key includes:
securely establishing, by the first device, a WPS interaction manner with the configuration device by means of wireless fidelity to share a credential, and using the credential as the second shared key; or
receiving, by the first device, a public key of the configuration device that is sent by the configuration device; and generating, by the first device, the second shared key according to a pre-agreed key exchange algorithm by using the public key of the configuration device and the private key of the first device, so that the configuration device generates, after acquiring the public key of the first device, the second shared key according to the pre-agreed key exchange algorithm by using the public key of the first device and a private key of the configuration device.

With reference to the fourth possible implementation manner of the first aspect, in an eleventh possible implementation manner, after the obtaining, by the first device, the public key of the second device, the method further includes: generating, by the first device, a new public key and a new private key; and
the public key of the first device that is sent by the first device to the second device is the new public key; the public key of the first device that is used by the second device to generate the first shared key is the new public key; and the private key of the first device that is used by the first device to generate the first shared key is the new private key.

With reference to the first aspect or any one of the first to the eleventh possible implementation manners of the first aspect, in a twelfth possible implementation manner, the first device is an enrollee enrollee, and the second device is a registrar; or the first device is a client client, and the second device is a GO; or the first device is a wireless terminal, and the second device is an access point; or the first device is a central node, and the second device is a sensor node.

With reference to the first aspect or any one of the first to the twelfth possible implementation manners of the first aspect, in a thirteenth possible implementation manner, the method further includes: rapidly discovering, by the first device, the second device according to channel information of the second device, so as to perform the step of sending information for obtaining a first shared key to the second device, where the channel information of the second device is acquired by the configuration device from the second device and then sent to the first device.

With reference to the first aspect or any one of the first to the thirteenth possible implementation manners of the first aspect, in a fourteenth possible implementation manner, the configuration device acquires information from the first device or the second device by scanning a two-dimensional code, by using a universal serial bus USB, or by means of near field communication.

With reference to the first aspect or any one of the first to the fourteenth possible implementation manners of the first aspect, in a fifteenth possible implementation manner, the method further includes: generating, by the first device, a verification value by using the public key of the second device, and sending the verification value to the second device,
so that the second device verifies, before generating the first shared key, the received verification value by using the public key of the second device, and performs, in a case in which verification succeeds, the step of generating the first shared key.

According to a second aspect, an embodiment of the present invention provides a key configuration method, where the key configuration method includes:
acquiring, by the configuration device, a public key of a second device, and sending the public key of the second device to a first device,
so that the first device sends information for obtaining a first shared key to the second device by using the public key of the second device; or so that the first device generates a first shared key by using the public key of the second device, and sends information for obtaining the first shared key to the second device; and
so that the second device generates the first shared key by using a private key of the second device and the information for obtaining the first shared key, where the first shared key is used for a secure connection between the first device and the second device.

With reference to the second aspect, in a first possible implementation manner, the sending, by the first device by using the public key of the second device, information for obtaining a first shared key to the second device includes: generating, by the first device, a password; using the password as the first shared key; encrypting the password by using the public key of the second device, to obtain an encryption result; and sending the encryption result to the second device; and
the generating, by the second device, the first shared key by using a private key of the second device and the information for obtaining the first shared key includes: decrypting, by the second device, the encryption result by using the private key of the second device, to obtain the password, and using the password as the first shared key; or
the generating, by the first device, a first shared key, and sending information for obtaining the first shared key to the second device by using the public key of the second device includes: generating, by the first device, a password; encrypting the password by using the public key of the second device, to obtain an encryption result; sending the encryption result to the second device; generating a derivation key for the password by using a key derivation algorithm; and using the derivation key as the first shared key; and
the generating, by the second device, the first shared key by using a private key of the second device and the information for obtaining the first shared key includes: decrypting, by the second device, the encryption result by using the private key of the second device, to obtain the password; generating the derivation key for the password by using the key derivation algorithm; and using the derivation key as the first shared key.

With reference to the second aspect, in a second possible implementation manner, the generating, by the first device, a first shared key, and sending information for obtaining the first shared key to the second device by using the public key of the second device includes: generating, by the first device, a randomizer; generating the first shared key by using information agreed by the first device and the second device and the randomizer; encrypting the randomizer by using the public key of the second device, and then sending an encryption result to the second device; and
the generating, by the second device, the first shared key by using a private key of the second device and the information for obtaining the first shared key includes: decrypting, by the second device, the encryption result by using the private key of the second device, to obtain the randomizer; and generating the first shared key by using the information agreed by the first device and the second device and the randomizer.

With reference to the second aspect, in a third possible implementation manner, the sending, by the first device, information for obtaining the first shared key to the second device by using the public key of the second device includes: encrypting, by the first device, a public key of the first device by using the public key of the second device, and then sending an encryption result to the second device; and
the generating, by the second device, the first shared key by using a private key of the second device and the information for obtaining the first shared key includes: decrypting, by the second device, the encryption result by using the private key of the second device, to obtain the public key of the first device; generating a password; and encrypting the password and then sending an encryption result to the first device,
so that the first device decrypts, by using a private key of the first device, the encryption result that is received, and then uses an obtained password as the first shared key.

With reference to the second aspect, in a fourth possible implementation manner, the method further includes: pre-agreeing, by the first device and the second device, a key exchange algorithm;
the generating, by the first device, a first shared key by using the public key of the second device, and sending information for obtaining the first shared key to the second device includes: generating, by the first device, the first shared key according to the key exchange algorithm by using the public key of the second device and a private key of the first device; and sending a public key of the first device to the second device; and
the generating, by the second device, the first shared key by using a private key of the second device and the information for obtaining the first shared key includes: generating, by the second device, the first shared key according to the key exchange algorithm by using the private key of the second device and the public key of the first device.

With reference to the fourth possible implementation manner of the second aspect, in a fifth possible implementation manner, the pre-agreeing, by the first device and the second device, a key exchange algorithm includes:
pre-configuring, in the first device and the second device, a parameter used by the key exchange algorithm; or
sending, by the configuration device, a parameter used by the key exchange algorithm to the first device and the second device.

With reference to the second aspect or any one of the first to the fifth possible implementation manners of the second aspect, in a sixth possible implementation manner, the configuration device acquires the public key of the first device; and
the sending, by the configuration device, the public key of the second device to the first device includes: encrypting, by the configuration device, the public key of the second device by using the public key of the first device, and sending an encryption result to the first device, so that the first device decrypts the encryption result, to obtain the public key of the second device.

With reference to the second aspect or any one of the first to the fifth possible implementation manners of the second aspect, in a seventh possible implementation manner, the method further includes: establishing, by the configuration device, a secure connection to the first device, so as to generate a second shared key; and
the sending the public key of the second device to the first device includes: encrypting, by the configuration device, the public key of the second device by using the second shared key, and then sending an encryption result to the first device, so that the first device decrypts, by using the second shared key, the encryption result that is received, to obtain the public key of the second device.

With reference to the seventh possible implementation manner of the second aspect, in an eighth possible implementation manner, the establishing, by the configuration device, a secure connection to the first device, so as to generate a second shared key includes:
sharing, by the configuration device, a credential with the first device in a WPS interaction manner, and using the credential as the second shared key; or
sending, by the configuration device, a public key of the configuration device to the first device, so that the configuration device generates the second shared key according to the pre-agreed key exchange algorithm by using the public key of the first device and the private key of the configuration device, and the first device generates the second shared key according to the pre-agreed key exchange algorithm by using the public key of the configuration device and the private key of the first device.

With reference to the second aspect or any one of the first to the eighth possible implementation manners of the second aspect, in a ninth possible implementation manner, the first device is an enrollee enrollee, and the second device is a registrar; or the first device is a client client, and the second device is a GO; or the first device is a wireless terminal, and the second device is an access point; or the first device is a central node, and the second device is a sensor node.

With reference to the second aspect or any one of the first to the ninth possible implementation manners of the second aspect, in a tenth possible implementation manner, the method further includes: acquiring, by the configuration device, channel information of the second device and sending the channel information to the first device, so that the first device rapidly discovers the second device according to the channel information of the second device, so as to perform the step of sending information for obtaining a first shared key to the second device.

With reference to the second aspect or any one of the first to the tenth possible implementation manners of the second aspect, in an eleventh possible implementation manner, the configuration device acquires information from the first device or the second device by scanning a two-dimensional code, by using a universal serial bus USB, or by means of near field communication.

According to a third aspect, an embodiment of the present invention provides a key configuration method, where the key configuration method includes:
providing, by a second device, a public key of the second device for a configuration device, so that the configuration device sends the public key of the second device to a first device;
receiving, by the second device, information that is used for obtaining a first shared key and that is sent by the first device by using the public key of the second device; or receiving information that is used for obtaining a first shared key and that is sent by the first device after the first device generates the first shared key by using the public key of the second device; and
generating, by the second device, the first shared key by using a private key of the second device and the information for obtaining the first shared key, where the first shared key is used for a secure connection between the first device and the second device.

With reference to the third aspect, in a first possible implementation manner, the receiving, by the second device, information that is used for obtaining a first shared key and that is sent by the first device by using the public key of the second device includes: receiving, by the second device, an encryption result sent by the first device, where the encryption result is obtained after the first device generates a password, uses the password as the first shared key, and then encrypts the password by using the public key of the second device; and
the generating, by the second device, the first shared key by using a private key of the second device and the information for obtaining the first shared key includes: decrypting, by the second device, the encryption result by using the private key of the second device, to obtain the password, and using the password as the first shared key; or
the receiving, by the second device, information that is used for obtaining a first shared key and that is sent by the first device by using the public key of the second device includes: receiving, by the second device, an encryption result sent by the first device, where the encryption result is obtained after the first device generates a password and then encrypts the password by using the public key of the second device; and
the generating, by the second device, the first shared key by using a private key of the second device and the information for obtaining the first shared key includes: decrypting, by the second device, the encryption result by using the private key of the second device, to obtain the password; generating a derivation key for the password by using the key derivation algorithm; and using the derivation key as the first shared key.

With reference to the third aspect, in a second possible implementation manner, the receiving, by the second device, information that is used for obtaining a first shared key and that is sent by the first device by using the public key of the second device includes: receiving, by the second device, an encryption result sent by the first device, where the encryption result is obtained after the first device generates a randomizer and then encrypts the randomizer by using the public key of the second device, and the first device generates the first shared key by using information agreed by the first device and the second device and the randomizer; and
the generating, by the second device, the first shared key by using a private key of the second device and the information for obtaining the first shared key includes: decrypting, by the second device, the encryption result by using the private key of the second device, to obtain the randomizer; and generating the first shared key by using the information agreed by the first device and the second device and the randomizer.

With reference to the third aspect, in a third possible implementation manner, the receiving, by the second device, information that is used for obtaining a first shared key and that is sent by the first device by using the public key of the second device includes: receiving, by the second device, an encryption result that is obtained after the first device encrypts a public key of the first device by using the public key of the second device; and
the generating, by the second device, the first shared key by using a private key of the second device and the information for obtaining the first shared key includes: decrypting, by the second device, the encryption result by using the private key of the second device, to obtain the public key of the first device; generating a password; using the password as the first shared password; and encrypting the password by using the public key of the first device, and then sending an encryption result to the first device,
so that the first device decrypts, by using a private key of the first device, the encryption result that is received, and then uses an obtained password as the first shared key.

With reference to the third aspect, in a fourth possible implementation manner, the method further includes: pre-agreeing, by the first device and the second device, a key exchange algorithm;
the receiving information that is used for obtaining a first shared key and that is sent by the first device after the first device generates the first shared key by using the public key of the second device includes: receiving, by the second device, a public key of the first device that is sent by the first device after the first device generates the first shared key according to the key exchange algorithm by using the public key of the second device and a private key of the first device; and
the generating, by the second device, the first shared key by using a private key of the second device and the information for obtaining the first shared key includes: generating, by the second device, the first shared key according to the key exchange algorithm by using the private key of the second device and the public key of the first device.

With reference to the fourth possible implementation manner of the third aspect, in a fifth possible implementation manner, the pre-agreeing, by the first device and the second device, a key exchange algorithm includes:
pre-configuring, in the second device and the first device, a parameter used by the key exchange algorithm; or
receiving, by the second device and the first device, a parameter used by the key exchange algorithm and sent by the configuration device.

With reference to the third aspect or any one of the first to the fifth possible implementation manners of the third aspect, in a sixth possible implementation manner, the first shared key being used for a secure connection between the first device and the second includes:
receiving, by the second device, an encryption result sent by the first device, where the encryption result is obtained after the first device obtains the first shared key, generates a credential, and then encrypts the credential by using the first shared key or the derivation key of the first shared key; and decrypting, by the second device, the encryption result by using the obtained first shared key or the derivation key of the first shared key, to obtain the credential, where the credential is used for a secure connection between the first device and the second device; or
generating, by the second device, a credential after obtaining the first shared key; encrypting the credential by using the first shared key or the derivation key of the first shared key, and then sending an encryption result to the first device, so that the first device decrypts the encryption result by using the obtained first shared key or the derivation key of the first shared key, to obtain the credential, where the credential is used for a secure connection between the first device and the second device.

With reference to the sixth possible implementation manner of the third aspect, in a seventh possible implementation manner, if the first device is a registrar Registrar, a central node, or a group owner GO, the first device generates the credential and sends the encryption result of the credential to the second device; or
if the second device is a Registrar, a central node, or a GO, the second device generates the credential and sends the encryption result of the credential to the first device.

With reference to the third aspect or any one of the first to the seventh possible implementation manners of the third aspect, in an eighth possible implementation manner, the method further includes:
providing, by the second device, channel information of the second device for the configuration device, so that the configuration device sends the channel information of the second device to the first device, and then the first device rapidly discovers the second device according to the channel information of the second device, so as to perform the step of sending information for obtaining a first shared key to the second device.

With reference to the third aspect or any one of the first to the eighth possible implementation manners of the third aspect, in a ninth possible implementation manner, the configuration device acquires information from the second device or the first device by using a two-dimensional code or a USB, or by means of near field communication.

With reference to the third aspect or any one of the first to the ninth possible implementation manners of the third aspect, in a tenth possible implementation manner, the method further includes:
receiving, by the second device, a verification value that is generated by the first device by using the public key of the second device; verifying, by the second device, the received verification value by using the public key of the second device; and performing, in a case in which verification succeeds, the step of generating the first shared key.

According to a fourth aspect, the key configuration apparatus includes:
a configuration receiving unit, configured to receive a public key of a second device that is sent by a configuration device after the configuration device acquires the public key of the second device; and
a key processing unit, configured to send, by using the public key of the second device, information for obtaining a first shared key to the second device, or generate a first shared key by using the public key of the second device, and send information for obtaining the first shared key to the second device, so that the second device generates the first shared key by using a private key of the second device and the information for obtaining the first shared key, where the first shared key is used for a secure connection between a first device and the second device.

With reference to the fourth aspect, in a first possible implementation manner, the key processing unit is specifically configured to generate a password, and use the password as the first shared key; encrypt the password by using the public key of the second device, to obtain an encryption result; and send the encryption result to the second device, so that the second device decrypts the encryption result by using the private key of the second device, to obtain the password, and uses the password as the first shared key; or
the key processing unit is specifically configured to generate a password, and encrypt the password by using the public key of the second device, to obtain an encryption result; send the encryption result to the second device; generate a derivation key for the password by using a key derivation algorithm; and use the derivation key as the first shared key, so that the second device decrypts the encryption result by using the private key of the second device, to obtain the password, generates the derivation key for the password by using the key derivation algorithm, and uses the derivation key as the first shared key.

With reference to the fourth aspect, in a second possible implementation manner, the key processing unit is specifically configured to generate a randomizer; generate the first shared key by using information agreed by the first device and the second device and the randomizer; encrypt the randomizer by using the public key of the second device, and then send an encryption result to the second device, so that the second device decrypts the encryption result by using the private key of the second device, to obtain the randomizer, and generates the first shared key by using the information agreed by the first device and the second device and the randomizer.

With reference to the fourth aspect, in a third possible implementation manner, the key processing unit is specifically configured to encrypt a public key of the first device by using the public key of the second device, and then send an encryption result to the second device; receive an encryption result sent by the second device, where the encryption result is obtained after the second device decrypts the received encryption result by using the private key of the second device, to obtain the public key of the first device, generates a password, uses the password as the first shared key, and then encrypts the password by using the public key of the first device; and decrypt the received encryption result by using a private key of the first device, and then use the obtained password as the first shared key.

With reference to the fourth aspect, in a fourth possible implementation manner, the key processing unit is specifically configured to generate, by using the public key of the second device and a private key of the first device, the first shared key according to a key exchange algorithm pre-agreed by the first device and the second device; and send a public key of the first device to the second device, so that the second device generates the first shared key according to the key exchange algorithm by using the private key of the second device and the public key of the first device.

With reference to the fourth possible implementation manner of the fourth aspect, in a fifth possible implementation manner, a parameter used by the key exchange algorithm is pre-configured in the key processing unit; or
the configuration receiving unit is further configured to receive a parameter used by the key exchange algorithm and sent by the configuration device, and provide the parameter for the key processing unit.

With reference to the fourth aspect or any one of the first to the fifth possible implementation manners of the fourth aspect, in a sixth possible implementation manner, the key configuration apparatus further includes:
a secure connection unit, configured to generate a credential after the key processing unit obtains the first shared key; encrypt the credential by using the first shared key or the derivation key of the first shared key, and then send an encryption result to the second device, so that the second device decrypts the encryption result by using the obtained first shared key or the derivation key of the first shared key, to obtain the credential, where the credential is used for a secure connection between the first device and the second device; or decrypt an encryption result, sent by the second device, of a credential by using the obtained first shared key or the derivation key of the first shared key, to obtain the credential, where the encryption result of the credential is obtained after the second device obtains the first shared key, generates the credential, and then encrypts the credential by using the first shared key or the derivation key of the first shared key, where the credential is used for a secure connection between the first device and the second device.

With reference to the fourth aspect or any one of the first to the sixth possible implementation manners of the fourth aspect, in a seventh possible implementation manner, the configuration receiving unit is specifically configured to receive an encryption result that is sent by the configuration device after the configuration device acquires the public key of the second device and the public key of the first device, where the encryption result is obtained after the configuration device encrypts the public key of the second device by using the public key of the first device; and
the key processing unit is further configured to decrypt the encryption result, to obtain the public key of the second device.

With reference to the fourth aspect or any one of the first to the sixth possible implementation manners of the fourth aspect, in an eighth possible implementation manner, the configuration receiving unit is specifically configured to establish a secure connection with the configuration device, so as to generate a second shared key; and receive an encryption result that is sent by the configuration device after the configuration device acquires the public key of the second device, where the encryption result is obtained after the configuration device encrypts the public key of the second device by using the second shared key; and
the key processing unit is further configured to decrypt the received encryption result by using the second shared key, to obtain the public key of the second device.

With reference to the eighth possible implementation manner of the fourth aspect, in a ninth possible implementation manner, when establishing a secure connection with the configuration device so as to generate the second shared key, specifically, the configuration receiving unit securely establishes a WPS interaction manner with the configuration device by means of wireless fidelity to share a credential, and uses the credential as the second shared key; or specifically receives a public key of the configuration device that is sent by the configuration device, so that the first device generates the second shared key according to the pre-agreed key exchange algorithm by using the public key of the configuration device and the private key of the first device.

With reference to the fourth possible implementation manner of the fourth aspect, in a tenth possible implementation manner, after obtaining the public key of the second device, the key processing unit is further configured to generate a new public key and a new private key; and
the public key of the first device that is sent by the first device to the second device is the new public key; the public key of the first device that is used by the second device to generate the first shared key is the new public key; and the private key of the first device that is used by the first device to generate the first shared key is the new private key.

With reference to the fourth aspect or any one of the first to the tenth possible implementation manners of the fourth aspect, in an eleventh possible implementation manner, the first device is an enrollee enrollee, and the second device is a registrar; or the first device is a client client, and the second device is a GO; or the first device is a wireless terminal, and the second device is an access point; or the first device is a central node, and the second device is a sensor node.

With reference to the fourth aspect or any one of the first to the eleventh possible implementation manners of the fourth aspect, in a twelfth possible implementation manner, the configuration receiving unit is further configured to receive channel information of the second device that is acquired from the second device and then sent by the configuration device; and
the key processing unit rapidly discovers the second device according to the channel information of the second device, so as to perform the operation of sending information for obtaining a first shared key to the second device.

With reference to the fourth aspect or any one of the first to the twelfth possible implementation manners of the fourth aspect, in a thirteenth possible implementation manner, the key processing unit is further configured to generate a verification value by using the public key of the second device, and send the verification value to the second device, so that the second device verifies, before generating the first shared key, the received verification value by using the public key of the second device, and performs, in a case in which verification succeeds, an operation of generating the first shared key.

According to a fifth aspect, the key configuration apparatus includes:
an information acquiring unit, configured to acquire a public key of a second device; and
an information sending unit, configured to send the public key of the second device to a first device,
so that the first device sends information for obtaining a first shared key to the second device by using the public key of the second device; or so that the first device generates a first shared key by using the public key of the second device, and sends information for obtaining the first shared key to the second device; and
so that the second device generates the first shared key by using a private key of the second device and the information for obtaining the first shared key, where the first shared key is used for a secure connection between the first device and the second device.

With reference to the fifth aspect, in a first possible implementation manner, the information sending unit is further configured to send a parameter used by a key exchange algorithm to the first device and the second device, where the key exchange algorithm is used to enable the first device to generate the first shared key according to the key exchange algorithm by using a private key of the first device and the public key of the second device, and enable the second device to generate the first shared key according to the key exchange algorithm by using the private key of the second device and a public key of the first device.

With reference to the fifth aspect or the first possible implementation manner of the fifth aspect, in a second possible implementation manner, the information acquiring unit is further configured to acquire the public key of the first device; and
the information sending unit is specifically configured to encrypt the public key of the second device by using the public key of the first device, and send an encryption result to the first device, so that the first device decrypts the encryption result, to obtain the public key of the second device.

With reference to the fifth aspect or the first possible implementation manner of the fifth aspect, in a third possible implementation manner, the information sending unit is further configured to establish a secure connection to the first device, so as to generate a second shared key; and when sending the public key of the second device to the first device, the information sending unit specifically encrypts the public key of the second device by using the second shared key, and sends an encryption result to the first device, so that the first device decrypts the received encryption result by using the second shared key, to obtain the public key of the second device.

With reference to the third possible implementation manner of the fifth aspect, in a fourth possible implementation manner, when establishing a secure connection to the first device so as to generate the second shared key, the information sending unit is specifically configured to share a credential with the first device in a WPS interaction manner, and use the credential as the second shared key; or send a public key of a configuration device to the first device, and generate the second shared key according to the pre-agreed key exchange algorithm by using the public key of the first device and a private key of the configuration device.

With reference to the fifth aspect or any one of the first to the fourth possible implementation manners of the fifth aspect, in a fifth possible implementation manner, the information acquiring unit is further configured to acquire channel information of the second device; and
the information sending unit is further configured to send the channel information of the second device to the first device, so that the first device rapidly discovers the second device according to the channel information of the second device, so as to perform the operation of sending information for obtaining a first shared key to the second device.

With reference to the fifth aspect or any one of the first to the fifth possible implementation manners of the fifth aspect, in a sixth possible implementation manner, the information acquiring unit is specifically configured to acquire information from the first device or the second device by scanning a two-dimensional code, by using a universal serial bus USB, or by means of near field communication.

According to a sixth aspect, the key configuration apparatus includes:
an information providing unit, configured to provide a public key of a second device to a configuration device, so that the configuration device sends the public key of the second device to a first device;
an information receiving unit, configured to receive information that is used for obtaining a first shared key and that is sent by the first device by using the public key of the second device; or receive information that is used for obtaining a first shared key and that is sent by the first device after the first device generates the first shared key by using the public key of the second device; and
a key generation unit, configured to generate the first shared key by using a private key of the second device and the information for obtaining the first shared key, where the first shared key is used for a secure connection between the first device and the second device.

With reference to the sixth aspect, in a first possible implementation manner, the information receiving unit is specifically configured to receive an encryption result sent by the first device, where the encryption result is obtained after the first device generates a password, uses the password as the first shared key, and encrypts the password by using the public key of the second device; and
the key processing unit is specifically configured to decrypt the encryption result by using the private key of the second device, to obtain the password, and use the password as the first shared key; or
the information receiving unit is specifically configured to receive an encryption result sent by the first device, where the encryption result is obtained after the first device generates a password and encrypts the password by using the public key of the second device; and
the key processing unit is specifically configured to decrypt the encryption result by using the private key of the second device, to obtain the password; generate a derivation key for the password by using the key derivation algorithm; and use the derivation key as the first shared key.

With reference to the sixth aspect, in a second possible implementation manner, the information receiving unit is specifically configured to receive an encryption result sent by the first device, where the encryption result is obtained after the first device generates a randomizer and encrypts the randomizer by using the public key of the second device, where the first device generates the first shared key by using information agreed by the first device and the second device and the randomizer; and
the key processing unit is specifically configured to decrypt the encryption result by using the private key of the second device, to obtain the randomizer; and generate the first shared key by using the information agreed by the first device and the second device and the randomizer.

With reference to the sixth aspect, in a third possible implementation manner, the information receiving unit is specifically configured to receive an encryption result that is obtained after the first device encrypts a public key of the first device by using the public key of the second device; and
the key processing unit is specifically configured to decrypt the encryption result by using the private key of the second device, to obtain the public key of the first device; generate a password; use the password as the first shared key; and encrypt the password by using the public key of the first device, and then send an encryption result to the first device, so that the first device decrypts the received encryption result by using a private key of the first device and then uses the obtained password as the first shared key.

With reference to the sixth aspect, in a fourth possible implementation manner, the information receiving unit is specifically configured to receive a public key of the first device that is sent by the first device after the first device generates the first shared key according to a key exchange algorithm by using the public key of the second device and a private key of the first device, where the key exchange algorithm is pre-agreed by the first device and the second device; and
the key processing unit is specifically configured to generate the first shared key according to the key exchange algorithm by using the private key of the second device and the public key of the first device.

With reference to the fourth possible implementation manner of the sixth aspect, in a fifth possible implementation manner, a parameter used by the key exchange algorithm is pre-configured in the key processing unit; or
the information receiving unit is further configured to receive a parameter used by the key exchange algorithm and sent by the configuration device, and provide the parameter for the key processing unit.

With reference to the sixth aspect or any one of the first to the fifth possible implementation manners of the sixth aspect, in a sixth possible implementation manner, the key configuration apparatus further includes:
a secure connection unit, configured to receive an encryption result sent by the first device, where the encryption result is obtained after the first device obtains the first shared key, generates a credential, and then encrypts the credential by using the first shared key or the derivation key of the first shared key; and decrypt the encryption result by using the obtained first shared key or the derivation key of the first shared key, to obtain the credential, where the credential is used for a secure connection between the first device and the second device; or
generate a credential after the key processing unit obtains the first shared key; encrypt the credential by using the first shared key or the derivation key of the first shared key, and then send an encryption result to the first device, so that the first device decrypts the encryption result by using the obtained first shared key or the derivation key of the first shared key, to obtain the credential, where the credential is used for a secure connection between the first device and the second device.

With reference to the sixth aspect or any one of the first to the sixth possible implementation manners of the sixth aspect, in a seventh possible implementation manner, the information providing unit is further configured to provide channel information of the second device for the configuration device, so that the configuration device sends the channel information of the second device to the first device, and then the first device rapidly discovers the second device according to the channel information of the second device, so as to perform the operation of sending information for obtaining a first shared key to the second device.

With reference to the sixth aspect or any one of the first to the seventh possible implementation manners of the sixth aspect, in an eighth possible implementation manner, the information providing unit is specifically configured to provide, by using a two-dimensional code or a USB, or by means of near field communication, information for the configuration device.

With reference to the sixth aspect or any one of the first to the seventh possible implementation manners of the sixth aspect, in a ninth possible implementation manner, the information receiving unit is further configured to receive a verification value that is generated by the first device by using the public key of the second device; and
the key processing unit is further configured to verify the received verification value by using the public key of the second device, and perform, in a case in which verification succeeds, an operation of generating the first shared key.

According to a seventh aspect, the key configuration system includes: the key configuration apparatus described according to the fourth aspect, the key configuration apparatus described according to the fifth aspect, and the key configuration apparatus described according to the sixth aspect; or
the key configuration apparatus described in the first possible implementation manner of the fourth aspect, the key configuration apparatus described according to the fifth aspect, and the key configuration apparatus described in the first possible implementation manner of the sixth aspect; or
the key configuration apparatus described in the second possible implementation manner of the fourth aspect, the key configuration apparatus described according to the fifth aspect, and the key configuration apparatus described in the second possible implementation manner of the sixth aspect; or
the key configuration apparatus described in the third possible implementation manner of the fourth aspect, the key configuration apparatus described according to the fifth aspect, and the key configuration apparatus described in the third possible implementation manner of the sixth aspect; or
the key configuration apparatus described in the fourth possible implementation manner of the fourth aspect, the key configuration apparatus described according to the fifth aspect, and the key configuration apparatus described in the fourth possible implementation manner of the sixth aspect; or
the key configuration apparatus described in the fifth possible implementation manner of the fourth aspect, the key configuration apparatus described in the first possible implementation manner of the fifth aspect, and the key configuration apparatus described in the fifth possible implementation manner of the sixth aspect; or
the key configuration apparatus described in the sixth possible implementation manner of the fourth aspect, the key configuration apparatus described according to the fifth aspect, and the key configuration apparatus described in the sixth possible implementation manner of the sixth aspect; or
the key configuration apparatus described in the seventh possible implementation manner of the fourth aspect, the key configuration apparatus described in the second possible implementation manner of the fifth aspect, and the key configuration apparatus described according to the sixth aspect or any one of the first to the sixth possible implementation manners of the sixth aspect; or
the key configuration apparatus described in the eighth possible implementation manner of the fourth aspect, the key configuration apparatus described in the third possible implementation manner of the fifth aspect, and the key configuration apparatus described according to the sixth aspect or any one of the first to the sixth possible implementation manners of the sixth aspect; or
the key configuration apparatus described in the ninth possible implementation manner of the fourth aspect, the key configuration apparatus described in the fourth possible implementation manner of the fifth aspect, and the key configuration apparatus described according to the sixth aspect or any one of the first to the sixth possible implementation manners of the sixth aspect; or
the key configuration apparatus described in the tenth possible implementation manner of the fourth aspect, the key configuration apparatus described according to the fifth aspect, and the key configuration apparatus described in the fourth possible implementation manner of the sixth aspect; or
the key configuration apparatus described in the eleventh possible implementation manner of the fourth aspect, the key configuration apparatus described according to the fifth aspect or any one of the first to the fourth possible implementation manners of the fifth aspect, and the key configuration apparatus described according to the sixth aspect or any one of the first to the sixth possible implementation manners of the sixth aspect; or
the key configuration apparatus described in the twelfth possible implementation manner of the fourth aspect, the key configuration apparatus described in the fifth possible implementation manner of the fifth aspect, and the key configuration apparatus described in the seventh possible implementation manner of the sixth aspect; or
the key configuration apparatus described in the thirteenth possible implementation manner of the fourth aspect, the key configuration apparatus described according to the fifth aspect or any one of the first to the fifth possible implementation manners of the fifth aspect, and the key configuration apparatus described in the ninth possible implementation manner of the sixth aspect; or
the key configuration apparatus described according to the fourth aspect or any one of the first to the thirteenth possible implementation manners of the fourth aspect, the key configuration apparatus described in the sixth possible implementation manner of the fifth aspect, and the key configuration apparatus described in the eighth possible implementation manner of the sixth aspect.

It can be seen from the foregoing technical solutions that, a third-party configuration device in the present invention is only configured to deliver public keys and device information between a first device and a second device, and a first shared key used for a secure connection between the first device and the second device is generated by the first device and the second device separately; moreover, the first shared key is not directly delivered between the first device and the second device, but information for obtaining the first shared key is delivered to the second device, and the first shared key is generated by necessarily using a private key of the second device. Therefore, even if an attacker intercepts a public key delivered between the configuration device, the first device, and the second device, the attacker also cannot obtain the first shared key, thereby improving security of an interaction between the first device and the second device.

### BRIEF DESCRIPTION OF DRAWINGS

FIG. 1 is a schematic flowchart of a key configuration method based on a third-party configuration device in the prior art;
FIG. 2 is a schematic flowchart of a key configuration method according to Embodiment 1 of the present invention;
FIG. 3 is a schematic flowchart of a key configuration method according to Embodiment 2 of the present invention;
FIG. 4 is a schematic flowchart of a key configuration method according to Embodiment 3 of the present invention;
FIG. 5 is a schematic flowchart of a key configuration method according to Embodiment 4 of the present invention;
FIG. 6 is a schematic flowchart of a key configuration method according to Embodiment 5 of the present invention;
FIG. 7 is a schematic flowchart of a key configuration method according to Embodiment 6 of the present invention;
FIG. 8 is a schematic composition diagram of a system according to an embodiment of the present invention;
FIG. 9 is a schematic structural diagram of a key configuration apparatus disposed in a first device according to an embodiment of the present invention;
FIG. 10 is a schematic structural diagram of a key configuration apparatus disposed in a configuration device according to an embodiment of the present invention;
FIG. 11 is a schematic structural diagram of a key configuration apparatus disposed in a second device according to an embodiment of the present invention;
FIG. 12 is a schematic structural diagram of hardware of a configuration device according to an embodiment of the present invention;
FIG. 13 is a schematic structural diagram of hardware of a first device according to an embodiment of the present invention; and
FIG. 14 is a schematic structural diagram of hardware of a second device according to an embodiment of the present invention.

### DESCRIPTION OF EMBODIMENTS

To make the objectives, technical solutions, and advantages of the present invention clearer, the following describes the present invention in detail with reference to the accompanying drawings and the embodiments.

A core concept of the present invention is as follows: A third-party configuration device acquires a public key of a second device and sends the public key of the second device to a first device; the first device generates a shared key and sends information for obtaining a first shared key to the second device by using the public key of the second device, or the first device generates a first shared key by using the public key of the second device and sends information for obtaining the first shared key to the second device; the first device sends a public key of the first device to the second device by using device information of the second device; the second device generates a shared key by using a private key of the second device and the information for obtaining the first shared key, where the shared key is used for a secure connection between the first device and the second device.

By using the foregoing core concept, the present invention may use or may not use a key exchange manner to perform configuration for a shared key. The method provided by the present invention is described in detail below by using several specific embodiments.

### Embodiment 1

In this embodiment, a key exchange manner is used to perform configuration for a shared key. A first device and a second device pre-agree a key exchange algorithm. The key exchange algorithm is an algorithm that is subsequently used by the first device and the second device during generation of a shared key, which may be, but is not limited to, a D-H algorithm, an RSA algorithm, an EIGamal algorithm, or the like. A pre-shared parameter varies as the key exchange algorithm varies. A core of the key exchange algorithm is as follows: Devices publicize their public keys and keep their private keys; each generates a shared key by using a public key of the other party and a private key of its own, to ensure, by using the shared key, security of a message that traverses an insecure network.

There may include, but is not limited to, the following two manners of sharing a parameter used by the key exchange algorithm: in the first manner, the parameter used by the key exchange algorithm is pre-configured in the first device and the second device; and in the second manner, a third-party configuration device sends the parameter used by the key exchange algorithm to the first device and the second device.

In the embodiments of the present invention, the D-H algorithm is used as an example. The first device and the second device pre-share parameters g and P, and the parameters g and P are pre-shared in the first device and the second device, where P is a prime number and g is a primitive root of P. In addition, the first device and the second device each have a public key and a private key. The public key and the private key of the first device are respectively PkeyA and keyA, and the public key and the private key of the second device are respectively PkeyB and keyB. The foregoing configurations exist in both Embodiment 2 and Embodiment 3 below, which will not be described in detail again.

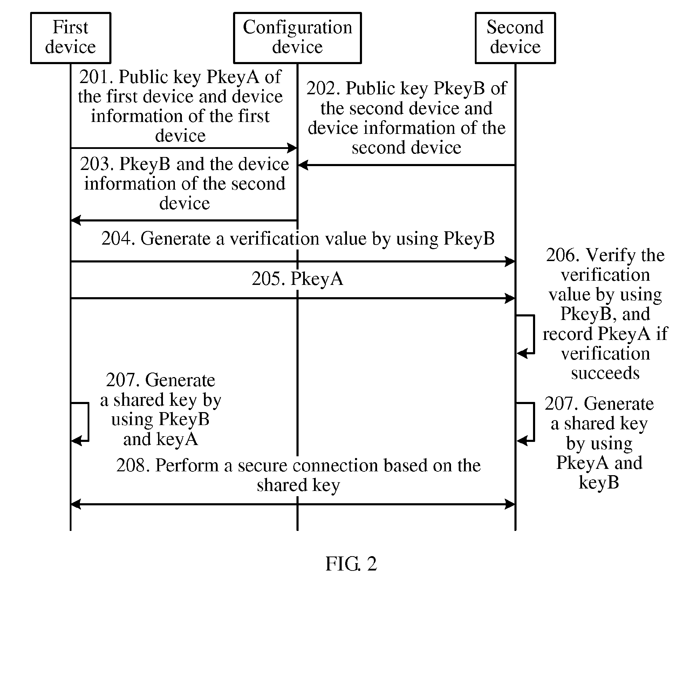

FIG. 2 is a schematic flowchart of a key configuration method according to Embodiment 1 of the present invention. As shown in FIG. 2, a process may include the following steps:
Step 201: A configuration device acquires a public key PkeyA of a first device and device information of the first device.

The device information includes at least address information of the first device.

This step is an optional step in this embodiment.

Step 202: The configuration device acquires a public key PkeyB of a second device and device information of the second device.

The device information includes at least address information of the second device.

The present invention does not limit a sequential order of the foregoing two steps. The two steps may be performed successively in any order, or may also be performed simultaneously.

The foregoing device information is mainly address information, which may further include, but is not limited to, the following device information: a UUID (Universally Unique Identifier, universally unique identifier), a manufacturer, a serial number, a device capability, and the like. The device capability refers to an algorithm, an authentication method, device role information, device type information, or the like that is supported by the device, where the device role information refers to a role of the device during registration, and the role may be an enrollee, a registrar, a client, a GO, or the like. The device type information may be a WiFi wireless terminal (for example, a mobile phone, a computer, or a sensor), an access point (an AP in a wifi network), a sensor node, a central node, or the like. The device information acquired by the configuration device in this embodiment is mainly address information.

The public key PkeyA of the first device, the device information of the first device, the public key PkeyB of the second device, and the device information of the second device may be acquired in multiple manners, for example, may be acquired by using a secure medium such as NFC or a USB; especially, for a headless device, a scanning identification code is preferably used. That is, the public key PkeyA of the first device and the device information of the first device are encoded to a scanning identification code of the first device, and the configuration device can acquire the public key PkeyA of the first device and the device information of the first device by scanning the scanning identification code; the situation is the same for the second device. The scanning identification code may be, for example, a two-dimensional code or a bar code.

Step 203: The configuration device sends the public key PkeyB of the second device and the device information of the second device to the first device according to the device information of the first device.

In this step, to further improve security and reliability, the configuration device may encrypt the public key PkeyB of the second device and the device information of the second device by using the public key PkeyA of the first device, and then send an encryption result to the first device.

Herein, an encryption manner using a public key is described, and there are mainly two encryption manners:
In the first encryption manner: if the public key is a public key for asymmetric encryption, the public key may be directly used for encryption, and it is required to use a corresponding private key for decryption.

In the second encryption manner: if the public key is a public key for key exchange, encryption is performed by using some information of the public key or based on derivation information of the public key; during decryption, it is required to use a symmetric key, not a corresponding private key, for decryption.

One of the foregoing encryption manners may be used in subsequent encryption and decryption processes according to a specific situation.

The second encryption manner is used herein for encryption.

Step 204: The first device generates a verification value by using the public key PkeyB of the second device, and sends the generated verification value to the second device.

If an encryption result is sent by the configuration device, the first device first decrypts the encryption result, to obtain the public key PkeyB of the second device and the device information of the second device.

The verification value that is generated by using the public key PkeyB of the second device in this step may be, but is not limited to, a hash (hash) value of PkeyB, or may also be a verification value generated by using another preset algorithm.

Step 205: The first device sends the public key PkeyA of the first device to the second device by using the device information of the second device.

After acquiring the address information of the second device, the first device sends the verification value and PkeyA to the second device. Because the key exchange manner is used to perform configuration for a shared key in this embodiment, information for obtaining a shared key and sent by the first device to the second device is the public key PkeyA of the first device in this embodiment.

In addition, it should be noted that, there is also no limitation on a sequential order of the foregoing steps 204 and 205; and the two steps may be performed successively in any order, or may also be performed simultaneously.

Step 206: The second device verifies the received verification value by using the public key PkeyB of the second device, and records the public key PkeyA of the first device if verification succeeds.

It should be noted that, step 204 and this step of verifying the verification value by the second device are operations performed to further improve security and reliability, and are not necessary steps of the present invention. If there is no step 204, the second device directly records the received PkeyA.

During verification, the second device may generate a verification value by using the public key PkeyB of the second device and a verification value generation method same as that used by the first device, and compare the generated verification value with the received verification value. If the generated verification value is consistent with the received verification value, the verification succeeds; otherwise, the verification fails. If the verification fails, the received public key PkeyA of the first device may be discarded, and a subsequent process is not performed; in addition, a user may be further informed of a configuration failure, for example, the user may be informed by using an indicator, or in a display manner on a screen, or in a voice manner.

Step 207: The first device generates a shared key by using the public key of the second device and a private key of the first device, and the second device generates a shared key by using the public key of the first device and a private key of the second device.

It should be noted that, the first device may generate the shared key at any time after step 203, that is, the first device may generate the shared key after acquiring the public key of the second device; and the generation of the shared key is not necessarily implemented in this step.

The first device and the second device use the pre-shared key exchange algorithm to generate the shared keys. Using the D-H algorithm as an example, the public key of the first device is PkeyA=(g^keyA)mod(P), where keyA is the private key of the first device and is a random number; the public key of the second device is PkeyB=(g^keyB)mod(P), where keyB is the private key of the second device and is also a random number. In the foregoing formulas , ^ is an exponential operator, X^Y indicates X raised to the Yth power, mod is a modulo operator, and XmodY indicates a modulo operation performed on Y by using X. The first device generates a shared key DHkeyA by using PkeyB and keyA, that is:
DHkeyA=((PkeyB)^keyA)mod(P)

The second device generates a shared key DHkeyB by using PkeyA and keyB, that is:
DHkeyB=((PkeyA)^keyB)mod(P)

It can be known from the D-H algorithm that DHkeyA= DHkeyB.

Step 208: The first device and the second device perform a secure connection based on the shared key.

That is, the first device and the second device may perform, based on the shared key, a subsequent interaction, and the subsequent interaction may include, but is not limited to: an authentication process, an association process, a data interaction process, and the like. The prior art may be used to perform the secure connection by using the shared key, which is not described herein again.

Moreover, in addition to performing the secure connection directly based on the shared key, the first device and the second device may generate, based on a shared key derivation algorithm, a derivation key for the shared key, and perform the subsequent secure connection by using the derivation key. The present invention does not limit the key derivation algorithm, as long as the first device and the second device pre-agree a consistent key derivation algorithm.

Alternatively, a credential is further delivered by using the shared key. The first device generates a credential after generating the shared key, encrypts the credential by using the shared key or the derivation key of the shared key, and then delivers an encryption result to the second device; the second device decrypts the encryption result by using the generated shared key or the derivation key of the shared key, to obtain the credential. Alternatively, the second device generates a credential after generating the shared key, encrypts the credential by using the shared key or the derivation key of the shared key, and then delivers an encryption result to the first device; the first device decrypts the encryption result by using the generated shared key or the derivation key of the shared key, to obtain the credential.

Herein, specifically, it may be determined according to a device type whether the first device sends the credential to the second device or the second device sends the credential to the first device. If the first device is a registrar, a central node, or a GO, the first device may generate the credential and send it to the second device.

### Embodiment 2

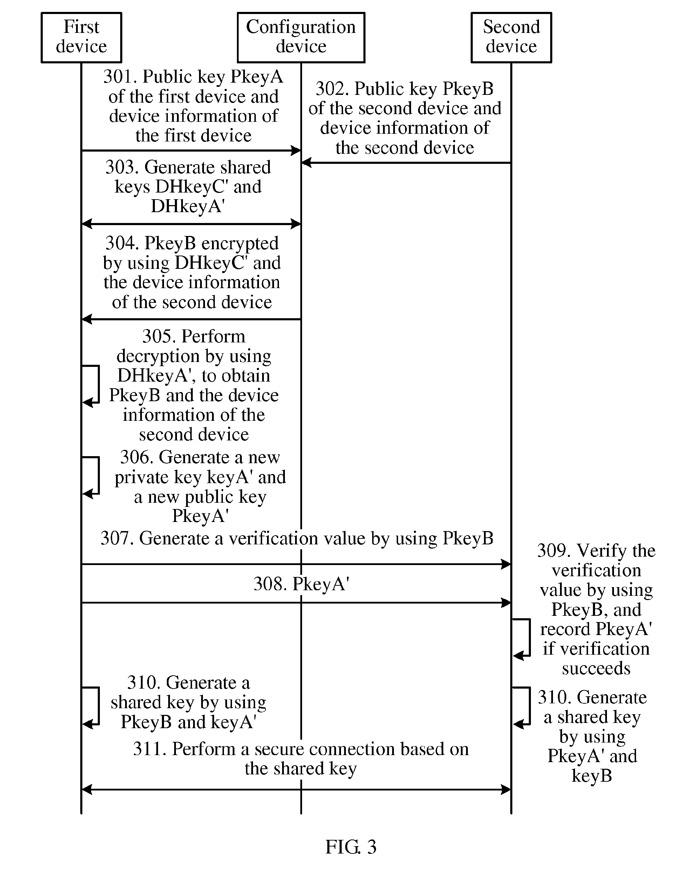

In this embodiment, a key exchange manner is also used to perform configuration for a shared key. FIG. 3 is a schematic flowchart of a key configuration method according to Embodiment 2 of the present invention. In this embodiment, steps same as those in Embodiment 1 are not described and reference is made to the description in Embodiment 1. As shown in FIG. 3, a process includes the following steps:
Step 301 is the same as step 201.
Step 302 is the same as step 302.
Step 303: The configuration device establishes a secure connection with the first device, so as to generate shared keys DHkeyC' and DHkeyA'.

The following two manners may be used to implement this step, but are not limited thereto.

In the first manner, the configuration device and the first device share a credential (that is, key1 generated in the description about FIG.1 in the background) in an existing WPS interaction manner, and use the credential as a shared key DHkey'.

In the second manner, the configuration device sends a public key PkeyC of the configuration device to the first device, the configuration device executes a key exchange algorithm by using the public key PkeyA of the first device and a private key keyC of the configuration device, and generates the shared key DHkeyC'; the first device executes the key exchange algorithm by using the public key PkeyC of the configuration device and a private key keyA of the first device, and generates the shared key DHkeyA'.

In such a manner, it is required to pre-share a parameter used by the key exchange algorithm between the configuration device and the first device. By using a D-H algorithm as an example, the configuration device also acquires shared parameters g and P in advance. The public key of the configuration device is PkeyC=(g^keyC)mod(P), the shared key generated by the configuration device is DHkeyC'=((PkeyA)^keyC)mod(P), and the shared key generated by the first device is DHkeyA'=((PkeyC)^keyA)mod(P). It can be known from the D-H algorithm that DHkeyC'= DHkeyA'.

Step 304: The configuration device encrypts the public key PkeyB of the second device and the device information of the second device by using the shared key DHkeyC', and then sends an encryption result to the first device.

Step 305: The first device decrypts the received encryption result by using the shared key DHkeyA', to acquire the public key PkeyB of the second device and the device information of the second device.

Alternatively, in step 304, the configuration device may also first generate a derivation key by using the shared key DHkeyC'; and then encrypt the public key PkeyB of the second device and the device information of the second device by using the derivation key, and send an encryption result to the first device. A specific manner of generating the derivation key is not described herein, as long as the configuration device and the first device pre-agree the generation manner. Correspondingly, in step 305, the first device first generates the derivation key by using the shared key DHkeyA', and then decrypts the received encryption result by using the derivation key.

Step 306: The first device generates a new private key keyA' and a new public key PkeyA'.

This step is a step performed to further improve interaction security. The first device generates a new random number, uses the random number as the private key keyA', and then generates the new public key PkeyA' by using the new private key. Using the D-H algorithm as an example, PkeyA' =(g^keyA')mod(P).

Subsequent steps 307 to 311 are the same as step 204 to step 208 in Embodiment 1 respectively, but the public key and the private key of the first device that are involved in these steps are replaced with the new public key PkeyA' and keyA' in step 306 respectively.

### Embodiment 3

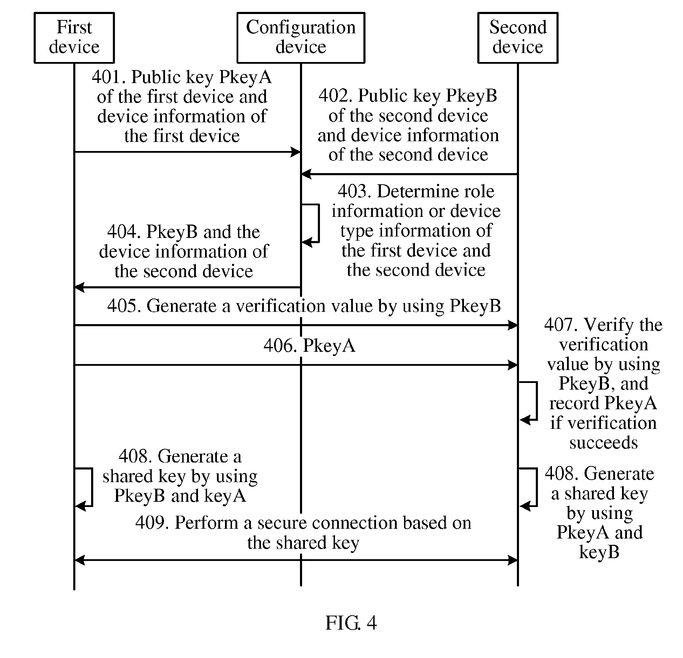

In this embodiment, a key exchange manner is also used to perform configuration for a shared key. FIG. 4 is a schematic flowchart of a key configuration method according to Embodiment 3 of the present invention. In this embodiment, steps same as those in Embodiment 1 are not described and reference is made to the description in Embodiment 1. As shown in FIG. 4, a process includes the following steps:
Step 401 is the same as step 201. It should be noted that, the device information of the first device that is acquired by the configuration device in this step includes at least address information of the first device, and device role information or device type information of the first device, where the device role information refers to a role of the device during registration, for example, the role may be an enrollee, a registrar, a client, or a GO. The device type information may be a wireless terminal, an access point, a sensor node, a central node, or the like.
Step 402 is the same as step 202. Likewise, the device information of the second device that is acquired by the configuration device includes at least address information of the second device, and device role information or device type information of the second device.

Same as the description in Embodiment 1, the public key PkeyA of the first device, the device information of the first device, the public key PkeyB of the second device, and the device information of the second device may be acquired in multiple manners, for example, may be acquired by using a secure medium such as NFC or a USB; especially, for a headless device, a scanning identification code is preferably used. That is, the public key PkeyA of the first device and the device information of the first device are written into a scanning identification code of the first device, and the configuration device can acquire the public key PkeyA of the first device and the device information of the first device by scanning the scanning identification code; the situation is the same for the second device. The scanning identification code may be, for example, a two-dimensional code or a bar code.

Step 403: The configuration device determines, according to the device role information or the device type information of the first device and the second device, whether to send the public key of the first device and the device information of the first device to the second device, or send the public key of the second device and the device information of the second device to the first device.

In this step, if the first device is an enrollee and the second device is a registrar, or if the first device is a client and the second device is a GO, or if the first device is a wireless terminal and the second device is an access point, it is determined that the public key of the second device and the device information of the second device are sent to the first device, which aims to enable the first device to rapidly discover the second device and improve efficiency. If the first device is a central node and the second device is a sensor node, it is determined that the public key of the second device and the device information of the second device are sent to the first device, which aims to enable the central node to rapidly discover the sensor node. If the first device and the second device are the same in role or type, for example, if they are both sensor nodes or clients, it is feasible either determining that the public key of the second device and the device information of the second device are sent to the first device or determining that the public key of the first device and the device information of the first device are sent to the second device. This step is optional.

Assuming that it is determined in step 403 that the public key of the second device and the device information of the second device are sent to the first device, step 404 is the same as step 203.

Steps 405 to 409 are the same as steps 204 to 208.

However, in this embodiment, before step 405 is performed, the first device may first determine, according to the device role information or the device type information of the first device and the second device, a manner of establishing a connection to the second device, so as to determine which message type is used in step 405 to send the verification value and the public key PkeyA of the first device. For example, if the first device is an enrollee and the second device is a registrar, or if the first device is a wireless terminal and the second device is an access point, the first device may send the verification value and the public key PkeyA of the first device to the second device by using a detection message. If the first device is a registrar and the second device is an enrollee, or if the first device is an access point and the second device is a wireless terminal, the first device may send the verification value and the public key PkeyA of the first device to the second device by using a broadcast message. If the first device is a GO and the second device is a client, the first device may send the verification value and the public key PkeyA of the first device to the second device by using an invitation message. If the first device is a client and the second device is a GO, the first device may send the verification value and the public key PkeyA of the first device to the second device by using a detection message. If the first device is a sensor node and the second device is a central node, the first device may send the verification value and the public key PkeyA of the first device to the second device by using a request message. If the first device is a central node and the second device is a sensor node, the first device may send the verification value and the public key PkeyA of the first device to the second device by using an invitation message or a broadcast message.

Optionally, the device information, acquired by the configuration device, of the first device and the second device may further include channel information. In such a case, the first device may rapidly discover the second device according to the channel information of the second device; and perform steps 405 and 406, that is, send the verification value and the public key PkeyA of the first device to the second device.

In addition to the foregoing process, this embodiment may also perform, from step 405, a process same as that from step 306 in Embodiment 2, till the first device and the second device perform a secure connection based on a shared key.

### Embodiment 4

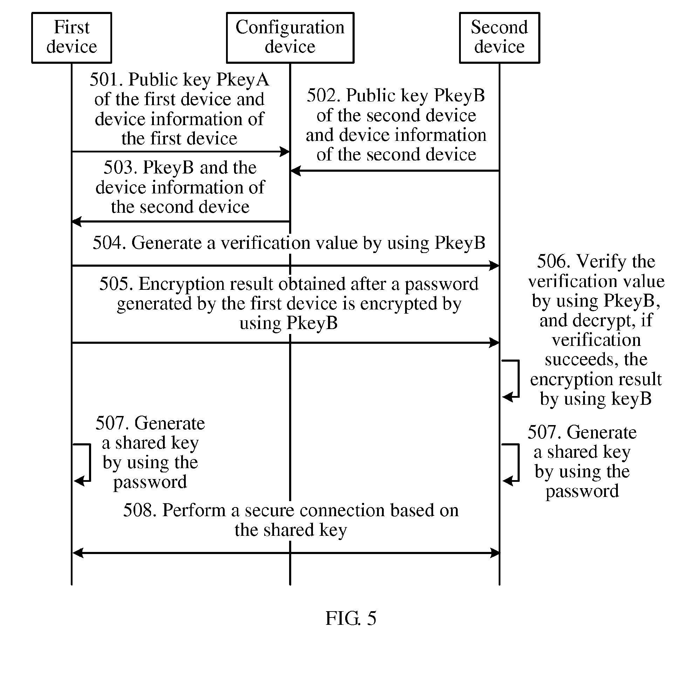

In this embodiment, a key exchange manner is not used to perform configuration for a shared key. FIG. 5 is a schematic flowchart of a key configuration method according to Embodiment 4 of the present invention. In this embodiment, steps different from those in Embodiment 1 are focused on and steps same as those in Embodiment 1 are not described. As shown in FIG. 5, a process includes the following steps:
Step 501 is the same as step 201.
Step 502 is the same as step 202.
Step 503 is the same as step 203.
Step 504 is the same as step 204.
Step 505: The first device generates a password (password), encrypts the password by using the public key PkeyB of the second device, and then sends an encryption result to the second device.

Herein, encryption is implemented by using the first encryption method described in Embodiment 1.

That is, after acquiring the address information of the second device, the first device sends, to the second device, the verification value and an encryption result obtained by encrypting the password. That is, in this embodiment, information for obtaining a shared key and sent by the first device to the second device is the password generated by the first device.

The first device generates the password in a random manner, for example, generates a random number and uses the random number as the password, or generates the password by using a preset algorithm.

Step 506: The second device verifies the received verification value by using the public key PkeyB of the second device; and decrypts, if the verification succeeds, a received encryption result by using a private key keyB of the second device, to obtain the password.

In this embodiment, for the public and private key pairs (PkeyB and keyB) of the second device, by using a certain encryption/decryption algorithm, an encryption result obtained after encryption with PkeyB can be decrypted by using keyB. Existing various manners may be used as this encryption/decryption algorithm, and details are not described herein one by one.

Step 507: The first device and the second device generate a shared key by using the foregoing password.

In this step, the first device and the second may directly use the password as the shared key; or may also generate a derivation key for the password by using a pre-agreed key derivation algorithm, and then use the derivation key as the shared key.

Likewise, an operation of generating the shared key by the first device may be performed at any time before generating the password, and is not limited to be performed in this step.

Step 508 is the same as step 208.

It should be noted that, technical content described in steps 303 to 306 in Embodiment 2 and technical content described in step 403 in Embodiment 3 are also applicable to Embodiment 4, and details are not described herein again.

### Embodiment 5

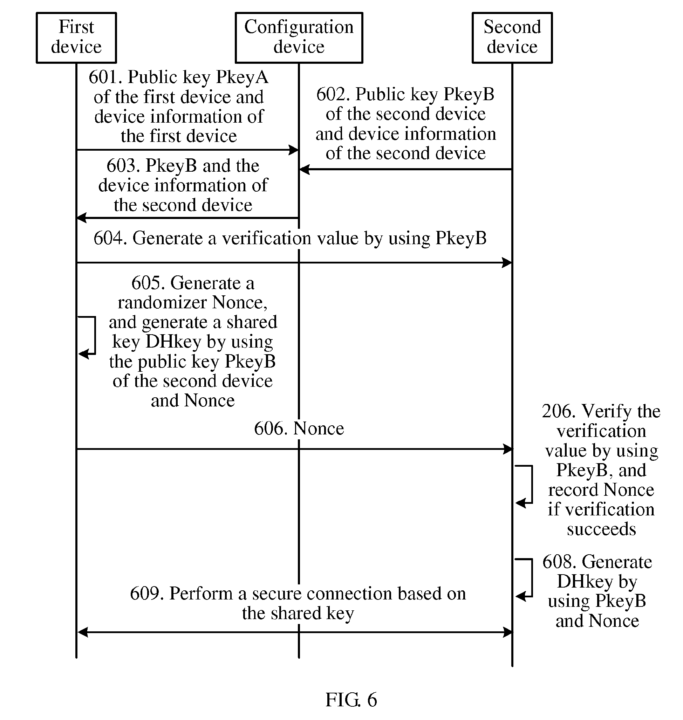

In addition to the shared key generation manner described in Embodiment 1, there is another shared key generation manner. Referring to FIG. 6, a process shown in this embodiment includes the following steps:
Step 601 is the same as step 201.
Step 602 is the same as step 202.
Step 603 is the same as step 203.
Step 604 is the same as step 204.
Step 605: The first device generates a randomizer Nonce, and generates a shared key DHkey by using the public key PkeyB of the second device and the randomizer Nonce.

Herein, in addition to using the public key PkeyB of the second device and the randomizer Nonce to generate the shared key DHkey, other information pre-agreed by the first device and the second device and the randomizer may also be used to generate the shared key DHkey, for example, a MAC (Media Access Control, media access control) value of the second device, the public key Pkey of the second device, and a hash value may also be used.

Step 606: The first device encrypts the randomizer Nonce by using the public key PkeyB of the second device, and then sends an encryption result to the second device.

In this embodiment, information for obtaining a shared key is the randomizer Nonce. Herein, an encryption manner may be the first encryption method described in Embodiment 1.

After receiving the encryption result, the second device decrypts the encryption result, to obtain the randomizer Nonce.

Step 607 is the same as step 206. However, if the verification succeeds, the randomizer Nonce is recorded.

Step 608: The second device generates a shared key DHkey by using the public key PkeyB of the second device and the randomizer Nonce.

Herein, as long as the first device and the second device pre-agree an algorithm for generating the shared key, the algorithm for generating the shared key is not specifically limited herein.

Step 609 is the same as step 208.

### Embodiment 6

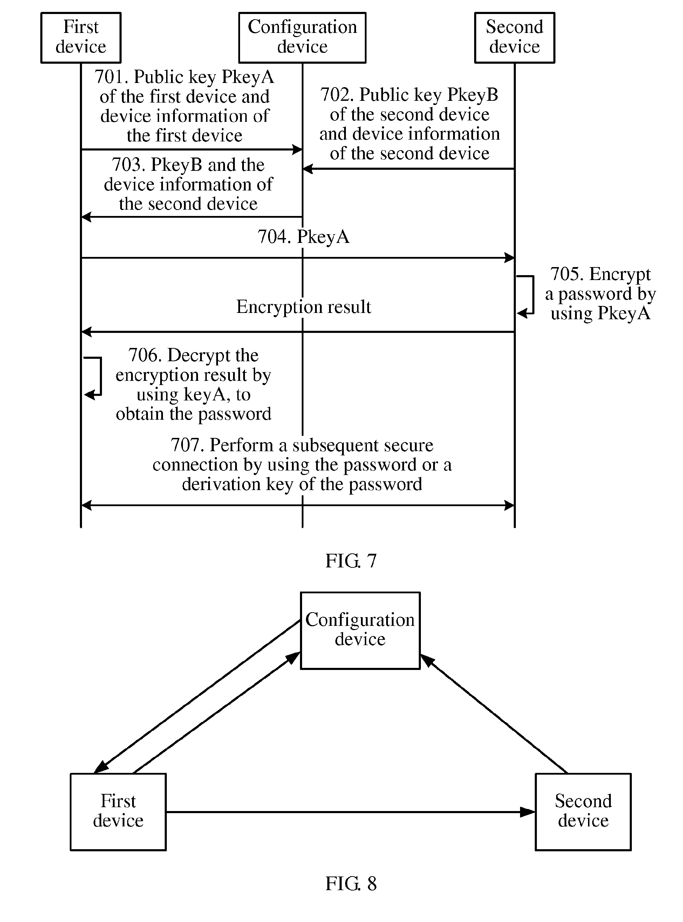

FIG. 7 is a schematic flowchart of a key configuration method according to Embodiment 6 of the present invention. As shown in FIG. 7, the method includes:
Step 701 is the same as step 201.
Step 702 is the same as step 202.
Step 703 is the same as step 203.
Step 704: The first device sends the public key PkeyA of the first device to the second device.

Herein, to improve security, the first device may encrypt PkeyA by using the public key PkeyB of the second device and then send the encrypted PkeyA to the second device; and the second device performs decryption by using the private key keyB of the second device, to obtain PkeyA.

Herein, encryption is implemented in the first encryption manner described in Embodiment 1.

Step 705: The second device encrypts a password by using the public key PkeyA of the first device, and sends an encryption result to the first device. The password may be a credential, a session key, or the like; may be randomly generated or may also be generated according to a certain algorithm, which is not limited herein.

Herein, the second device may generate a verification value by using the public key PkeyA of the first device, for example, the second device generates a hash value of PkeyA and sends the hash value to the first device. The first device first generates, after receiving the verification value, a verification value by using the public key PkeyA of the first device; compares the generated verification value with the received verification value; and if the generated verification value is consistent with the received verification value, determines that the verification succeeds and continues to perform step 706.

Step 706: The first device decrypts the encryption result by using the private key keyA of the first device, to obtain the password.

Step 707: The first device and the second device perform a subsequent secure connection by using the foregoing password or a derivation key of the password.

Information for obtaining a shared key in Embodiment 7 is the public key of the first device.

The foregoing describes the method provided by the present invention, and a corresponding system is described in detail below. FIG. 8 is a schematic composition diagram of a system according to an embodiment of the present invention. As shown in FIG. 8, the system includes a first device, a second device, and a third-party configuration device.

The configuration device is configured to acquire a public key of the second device, and send the public key of the second device to the first device.

The first device is mainly responsible for generating a first shared key, and providing information for obtaining the first shared key for the second device, so that the second device generates a first shared key. Specifically, the first device may implement this function by using the following two manners:

In the first manner, the first device generates the first shared key, and sends the information for obtaining the first shared key to the second device according to device information of the second device by using the public key of the second device. This manner corresponds to the manner described in Embodiment 4.

In the second manner, the first device generates the first shared key by using the public key of the second device, and sends the information for obtaining the first shared key to the second device according to device information of the second device. This manner corresponds to the manner described in Embodiment 1 to Embodiment 3.

The second device is configured to generate the first shared key by using a private key of the second device and the information for obtaining the first shared key, where the first shared key is used for a secure connection between the first device and the second device.

It should be noted that, herein, the name of the first shared key aims to distinguish from a second shared key that is shared between the configuration device and the first device in a subsequent exemplary embodiment.

Two implementation manners of the first device are separately described in detail below. For the first manner, the first device generates a password and uses the password as the first shared key, or generates a derivation key for the password by using a key derivation algorithm and uses the derivation key as the first shared key; and then, encrypts the password by using the public key of the second device, and sends an encryption result to the second device. In such a manner, the information for obtaining the first shared key is the password. The first device generates the password in a random manner, for example, generates a random number and uses the random number as the password, or generates the password by using a preset algorithm.

The second device decrypts the encryption result by using the private key of the second device, to obtain the password, and uses the password as the first shared key; or generates the derivation key for the password by using a key derivation algorithm and uses the derivation key as the first shared key. In such a manner, for the public and private key pairs (PkeyB and keyB) of the second device, by using a certain encryption/decryption algorithm, an encryption result obtained after encryption with the public key PkeyB can be decrypted by using the private key keyB. This encryption/decryption algorithm is a rather mature manner at present, and details are not described herein one by one.

In the first manner, there is another implementation. That is, the first device generates a randomizer, generates the first shared key by using information agreed by the first device and the second device and the randomizer, encrypts the randomizer by using the public key of the second device, and then sends an encryption result to the second device. The second device encrypts the encryption result by using the private key of the second device, to obtain the randomizer, and then generates the first shared key by using the information agreed by the first device and the second device and the randomizer. In this implementation, the information agreed by the first device and the second device may be information such as the public key of the second device, a hash value of the public key of the second device, and a MAC address of the second device. These pieces of information may be acquired by the third-party configuration device from the second device and then sent to the first device, or even may also be some specific values that are pre-configured by the first device and the second device.

For the second manner, the first device and the second device need to pre-agree a key exchange algorithm. Herein, the key exchange algorithm that may be used may be, but is not limited to, a D-H algorithm, an RSA algorithm, an EIGamal algorithm, or the like. A pre-shared parameter varies as the key exchange algorithm varies. Using the D-H algorithm as an example, the first device and the second device pre-share parameters g and P, and the parameters g and P are pre-shared in the first device and the second device, where P is a prime number and g is a primitive root of P.

There may include, but is not limited to, the following two manners of sharing, by the first device and the second device, a parameter used by the key exchange algorithm. In the first manner, the parameter used by the key exchange algorithm is pre-configured in the first device and the second device; and in the second manner, a third-party configuration device sends the parameter used by the key exchange algorithm to the first device and the second device.

In the second manner, the first device is specifically configured to generate the first shared key according to a key exchange algorithm and by using the public key of the second device and the private key of the first device, and send a public key of the first device to the second device. In such a manner, the information for obtaining the first shared key is the public key of the first device.

Using the D-H algorithm as an example, the public key PkeyA of the first device is PkeyA=(g^keyA)mod(P), where keyA is a private key of the first device and is a random number; and the generated first shared key DHkeyA is DHkeyA=((PkeyB)^keyA)mod(P).

The second device is specifically configured to generate the first shared key according to the key exchange algorithm by using the public key of the first device and the private key of the second device. The public key PkeyB of the second device is PkeyB=(g^keyB)mod(P), where keyB is a private key of the second device and is also a random number. The generated first shared key DHkeyB is DHkeyB=((PkeyA)^keyB)mod(P). It can be known from the D-H algorithm that DHkeyA= DHkeyB.

In the foregoing second manner, the first device and the second device may share, in the following two manners, the parameter used by the key exchange algorithm:

(1) The parameter used by the key exchange algorithm is pre-configured in the first device and the second device, that is, a static configuration manner is used; and
(2) the configuration device sends the parameter used by the key exchange algorithm to the first device and the second device, that is, the third-party configuration device completes configuration of the parameter used by the key exchange algorithm in the first device and the second device.

Based on the foregoing first manner or second manner, the configuration device is further configured to acquire device information of the second device and the first device. The device information involved in this embodiment of the present invention may include, but is not limited to, address information, a device capability, a manufacturer, a serial number, a UUID, and the like, where the device capability refers to an algorithm, an authentication method, device role information, device type information, or the like that is supported by the device, where the device role information refers to a role of the device during registration, and the role may be an enrollee, a registrar, a client, a GO, or the like. The device type information may be a wireless terminal, an access point, a sensor node, a central node, or the like.

The device information involved herein includes at least the address information. In this way, the configuration device can perform, according to address information of the first device, operations of sending the public key of the second device and the device information of the second device to the first device, and acquiring address information of the second device and sending the address information of the second device to the first device, so that the first device can send, according to the address information of the second device, information for obtaining a first shared key.

Further, based on the foregoing first manner or second manner, the configuration device is further configured to acquire the public key of the first device. When sending the public key of the second device and the device information of the second device to the first device, the configuration device specifically encrypts the public key of the second device and the device information of the second device by using the public key of the first device, where encryption herein may be implemented in the second encryption manner described in Embodiment 1; and sends an encryption result to the first device.

In this case, the first device decrypts the encryption result, to obtain the public key of the second device and the device information of the second device. This exemplary implementation manner corresponds to content described in Embodiment 1.

Specifically, based on the foregoing first manner or second manner, when the configuration device acquires information from the first device or the second device, a public key and device information are included. Specifically, the configuration device acquires information from the first device or the second device by scanning a two-dimensional code, by using a USB, or by means of near field communication.

Optionally, the first device may further generate a verification value by using the public key of the second device, where the verification value may be, but is not limited to, a hash value of the public key of the second device or a verification value generated by using another preset algorithm; and then send the verification value to the second device according to the device information of the second device.

Before generating the first shared key, the second device verifies the received verification value by using the public key of the second device, and if the verification succeeds, continues to perform an operation of generating the first shared key; otherwise, discards the public key of the first device and does not perform the subsequent operation, and may further inform a user of a configuration failure. For example, the user may be informed by using an indicator, in a display manner on a screen, or in a voice manner. This exemplary implementation manner corresponds to content described in Embodiment 1.

Optionally, the configuration device may further establish a secure connection to the first device, so as to generate a second shared key. Herein, the following two manners may be used specifically: In the first manner, the configuration device and the first device share a credential in an existing WPS interaction manner, and use the credential as the second shared key. In the second manner, the configuration device sends a public key of the configuration device to the first device, and the configuration device executes a key exchange algorithm by using the public key of the first device and a private key of the configuration device, to generate the second shared key; and the first device executes a key exchange algorithm by using the public key of the configuration device and the private key of the first device, to generate the second shared key.

When the configuration device sends the public key of the second device and the device information of the second device to the first device, specifically, the configuration device encrypts the public key of the second device and the device information of the second device by using the second shared key, and then sends an encryption result to the first device. The first device decrypts the received encryption result by using the second shared key, to obtain the public key of the second device and the device information of the second device. This exemplary implementation manner corresponds to content described in Embodiment 2.

Optionally, based on the foregoing first manner or second manner, the first device may further generate a new public key and a new private key after obtaining the public key of the second device and the device information of the second device. In this case, the public key of the first device that is sent by the first device to the second device is the new public key; the public key of the first device that is used by the second device to generate the first shared key is the new public key; and the private key of the first device that is used by the first device to generate the first shared key is the new private key. This implementation manner can further improve interaction security, and corresponds to content described in Embodiment 2.

Optionally, based on the foregoing first manner or second manner, the device role information or the device type information that is included in the device information may further be used. That is, the configuration device may be further configured to determine, according to device role information or device type information of the first device and the second device, whether to send the public key of the second device and the device information of the second device to the first device, or send the public key of the first device and the device information of the first device to the second device.

If the first device is an enrollee enrollee and the second device is a registrar, or if the first device is a client client and the second device is a group owner GO, or if the first device is a wireless terminal and the second device is an access point, the configuration device determines that the public key of the second device and the device information of the second device are sent to the first device, which can enable the first device to rapidly discover the second device and improve efficiency. Alternatively, if the first device is a central node and the second device is a sensor node, the configuration device determines that the public key of the second device and the device information of the second device are sent to the first device, which aims to enable the central node to rapidly discover the sensor node. This exemplary implementation manner corresponds to content described in Embodiment 3.

If the first device and the second device are the same in role or type, for example, if they are both sensor nodes or clients, it is feasible either determining that the public key of the second device and the device information of the second device are sent to the first device or determining that the public key of the first device and the device information of the first device are sent to the second device.

Preferably, based on the foregoing first manner or second manner, channel information included in the device information may further be used. That is, the first device is further configured to rapidly discover the second device according to the channel information of the second device, so as to perform an operation of sending information for obtaining a first shared key to the second device.

Moreover, in addition to performing the secure connection directly based on the first shared key, the first device and the second device may generate, based on a shared key derivation algorithm, a derivation key for the first shared key, and perform a secure connection by using the derivation key. The subsequent secure connection may include, but is not limited to: an authentication process, an association process, a data interaction process, and the like. The prior art may be used to perform the secure connection by using the shared key, which is not described herein again.

The foregoing configuration device may include one or more servers, or include one or more computers; the foregoing first device and second device may be, for example, personal computers, notebook computers, wireless phones, personal digital assistants (PDA), sensor nodes, and APs. It should be noted that, the manner and the system that are provided in the present invention may be applicable to any wireless network, which is not limited to a WiFi network, such as Bluetooth or Zigbee; or even may be applicable to key configuration in a wired network.

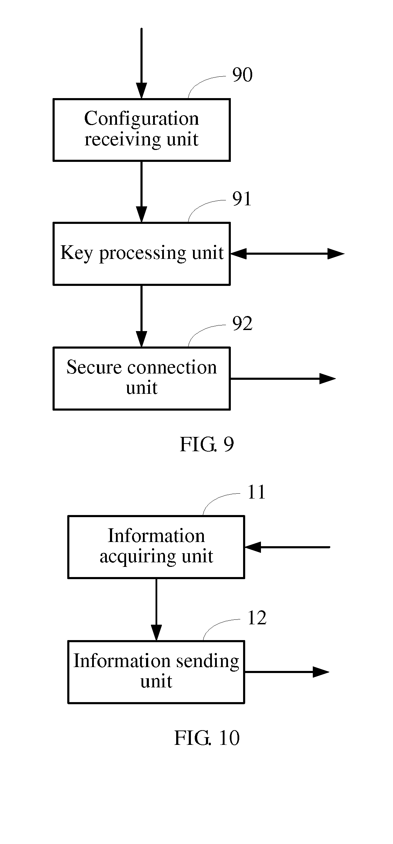

FIG. 9 is a schematic structural diagram of a key configuration apparatus disposed in a first device according to an embodiment of the present invention. As shown in FIG. 9, the key configuration apparatus includes a configuration receiving unit 90 and a key processing unit 91.

The configuration receiving unit 90 is responsible for receiving a public key of a second device that is sent by a configuration device after the configuration device acquires the public key of the second device.

The key processing unit 91 is responsible for sending information for obtaining a first shared key to the second device by using the public key of the second device, or generating, by the first device, a first shared key by using the public key of the second device, and sending information for obtaining the first shared key to the second device, so that the second device generates the first shared key by using a private key of the second device and the information for obtaining the first shared key, where the first shared key is used for a secure connection between the first device and the second device.

The first shared key may be obtained in the following several manners:
In the first manner, the key processing unit 91 generates a password, uses the password as the first shared key, encrypts the password by using the public key of the second device, to obtain an encryption result, and then sends the encryption result to the second device, so that the second device decrypts the encryption result by using the private key of the second device, to obtain the password, and uses the password as the first shared key.

In the second manner, the key processing unit 91 generates a password, and encrypts the password by using the public key of the second device, to obtain an encryption result; sends the encryption result to the second device; generates a derivation key for the password by using a key derivation algorithm; and uses the derivation key as the first shared key, so that the second device decrypts the encryption result by using the private key of the second device, to obtain the password, generates the derivation key for the password by using the key derivation algorithm, and uses the derivation key as the first shared key.

In the third manner, the key processing unit 91 generates a randomizer; generates the first shared key by using information agreed by the first device and the second device and the randomizer; encrypts the randomizer by using the public key of the second device, and then sends an encryption result to the second device, so that the second device decrypts the encryption result by using the private key of the second device, to obtain the randomizer, and generates the first shared key by using the information agreed by the first device and the second device and the randomizer.

In the fourth manner, the key processing unit 91 encrypts a public key of the first device by using the public key of the second device, and then sends an encryption result to the second device; receives an encryption result sent by the second device, where the encryption result is obtained after the second device decrypts the received encryption result by using the private key of the second device, to obtain the public key of the first device, generates a password, uses the password as the shared key, and then encrypts the password by using the public key of the first device; and decrypts, by using a private key of the first device, the encryption result that is received, and then uses an obtained password as the first shared key.

In the fifth manner, the key processing unit 91 generates the first shared key according to a key exchange algorithm pre-agreed by the first device and the second device, and by using the public key of the second device and the private key of the first device, and sends the public key of the first device to the second device, so that the second device generates the first shared key according to the key exchange algorithm by using the private key of the second device and the public key of the first device.

A parameter used by the key exchange algorithm may be pre-configured in the key processing unit 91; or the configuration receiving unit 91 receives a parameter used by the key exchange algorithm and sent by the configuration device, and provides the parameter for the key processing unit 91.

Further, the key configuration apparatus may further include a secure connection unit 92.

The secure connection unit 92 generates a credential after the key processing unit 91 obtains the first shared key; encrypts the credential by using the first shared key or the derivation key of the first shared key, and then sends an encryption result to the first device, so that the first device decrypts the encryption result by using the obtained first shared key or the derivation key of the first shared key, to obtain the credential, where the credential is used for a secure connection between the first device and the second device (this implementation is shown in the figure). Alternatively, the secure connection unit 92 is configured to decrypt an encryption result, sent by the second device, of a credential by using the obtained first shared key or the derivation key of the first shared key, to obtain the credential, where the encryption result of the credential is obtained after the second device obtains the first shared key, generates the credential, and then encrypts the credential by using the first shared key or the derivation key of the first shared key, where the credential is used for a secure connection between the first device and the second device.

To improve security, the configuration receiving unit 90 may receive an encryption result that is sent by the configuration device after the configuration device acquires the public key of the second device and the public key of the first device, where the encryption result is obtained after the configuration device encrypts the public key of the second device by using the public key of the first device. In this case, the key processing unit 91 may be further configured to decrypt the encryption result, to obtain the public key of the second device.

There is another implementation: The configuration receiving unit 90 establishes a secure connection to the configuration device, so as to generate a second shared key; and receives an encryption result that is sent by the configuration device after the configuration device acquires the public key of the second device, where the encryption result is obtained after the configuration device encrypts the public key of the second device by using the second shared key. In this case, the key processing unit 91 decrypts the received encryption result by using the second shared key, to obtain the public key of the second device.

When establishing a secure connection to the configuration device so as to generate the second shared key, the configuration receiving unit 90 specifically shares a credential with the configuration device in a WPS interaction manner, and uses the credential as the second shared key; or specifically receives a public key of the configuration device that is sent by the configuration device, so that the first device generates the second shared key according to the pre-agreed key exchange algorithm by using the public key of the configuration device and the private key of the first device.

To further improve the security, the key processing unit 91 may further generate a new public key and a new private key after obtaining the public key of the second device. In this case, the public key of the first device that is sent by the first device to the second device is the new public key; the public key of the first device that is used by the second device to generate the first shared key is the new public key; and the private key of the first device that is used by the first device to generate the first shared key is the new private key.

Preferably, the configuration receiving unit 90 may further receive channel information of the second device that is acquired from the second device and then sent by the configuration device. In this way, the key processing unit 91 can rapidly discover the second device according to the channel information of the second device, so as to perform an operation of sending information for obtaining a first shared key to the second device.

In addition, the key processing unit 91 may further generate a verification value by using the public key of the second device, and send the verification value to the second device, so that the second device verifies, before generating the first shared key, the received verification value by using the public key of the second device, and performs, in a case in which verification succeeds, an operation of generating the first shared key.

FIG. 10 is a schematic structural diagram of a key configuration apparatus disposed in a configuration device according to an embodiment of the present invention. As shown in FIG. 10, the key configuration apparatus includes an information acquiring unit 11 and an information sending unit 12.

The information acquiring unit 11 is responsible for acquiring a public key of a second device.

The information sending unit 12 is responsible for sending the public key of the second device to a first device.

In this way, the first device can send information for obtaining a first shared key to the second device by using the public key of the second device; or the first device can generate a first shared key by using the public key of the second device, and send information for obtaining the first shared key to the second device.

Then, the second device generates the first shared key by using a private key of the second device and the information for obtaining the first shared key, where the first shared key is used for a secure connection between the first device and the second device.

If the first device and the second device implement, based on a pre-agreed key exchange algorithm, generation of the first shared key, the information sending unit 12 may further send a parameter used by the key exchange algorithm to the first device and the second device, where the key exchange algorithm is used to enable the first device to generate the first shared key according to the key exchange algorithm by using a private key of the first device and the public key of the second device, and enable the second device to generate the first shared key according to the key exchange algorithm by using the private key of the second device and a public key of the first device.

To improve information transfer security, the information acquiring unit 11 may acquire the public key of the first device. The information sending unit 12 encrypts the public key of the second device by using the public key of the first device, and sends an encryption result to the first device, so that the first device decrypts the encryption result, to obtain the public key of the second device.

There is another manner: The information sending unit 12 establishes a secure connection to the first device, so as to generate a second shared key; when sending the public key of the second device to the first device, specifically encrypts the public key of the second device by using the second shared key and then sends an encryption result to the first device, so that the first device decrypts the received encryption result by using the second shared key, to obtain the public key of the second device.

Specifically, when establishing a secure connection to the first device so as to generate the second shared key, the information sending unit 12 shares a credential with the first device in a WPS interaction manner, and uses the credential as the second shared key; or sends a public key of the configuration device to the first device, and generates the second shared key according to the pre-agreed key exchange algorithm by using the public key of the first device and a private key of the configuration device.

To further improve efficiency of discovering the second device by the first device, the information acquiring unit 11 may further acquire channel information of the second device. In this case, the information sending unit 12 sends the channel information of the second device to the first device, so that the first device rapidly discovers the second device according to the channel information of the second device, so as to perform an operation of sending information for obtaining a first shared key to the second device.

Specifically, the information acquiring unit 11 acquires information from the first device or the second device by scanning a two-dimensional code, by using a universal serial bus USB, or by means of near field communication.

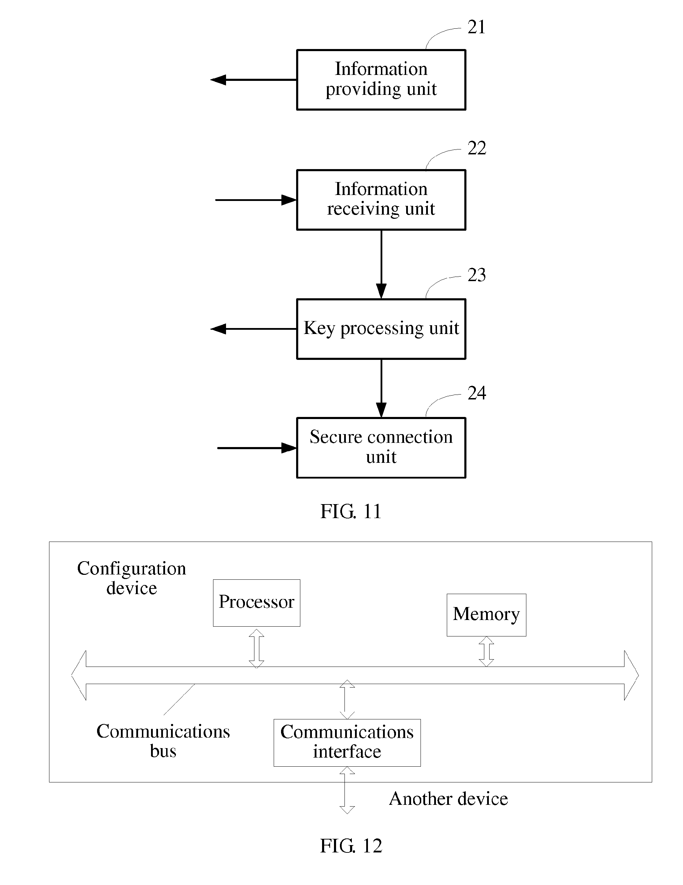

FIG. 11 is a schematic structural diagram of a key configuration apparatus disposed in a second device according to an embodiment of the present invention. As shown in FIG. 11, the key configuration apparatus may include an information providing unit 21, an information receiving unit 22 and a key processing unit 23.

The information providing unit 21 is responsible for providing a public key of the second device to a configuration device, so that the configuration device sends the public key of the second device to a first device.

The information receiving unit 22 is responsible for receiving information that is used for obtaining a first shared key and that is sent by the first device by using the public key of the second device; or receiving information that is used for obtaining a first shared key and that is sent by the first device after the first device generates the first shared key by using the public key of the second device.

The key processing unit 23 is responsible for generating the first shared key by using a private key of the second device and the information for obtaining the first shared key, where the first shared key is used for a secure connection between the first device and the second device.

The first shared key may be obtained in the following several manners:
In the first manner, the information receiving unit 22 receives an encryption result sent by the first device, where the encryption result is obtained after the first device generates a password, uses the password as the first shared key, and then encrypts the password by using the public key of the second device.

In this case, the key processing unit 23 decrypts the encryption result by using a private key of the second device, to obtain the password, and uses the password as the first shared key.

In the second manner, the information receiving unit 22 receives an encryption result sent by the first device, where the encryption result is obtained after the first device generates a password, and then encrypts the password by using the public key of the second device.

In this case, the key processing unit 23 decrypts the encryption result by using the private key of the second device, to obtain the password; generates a derivation key for the password by using a key derivation algorithm, and uses the derivation key as the first shared key.

In the third manner, the information receiving unit 22 receives an encryption result sent by the first device, where the encryption result is obtained after the first device generates a randomizer, generates the first shared key by using information agreed by the first device and the second device and the randomizer, and encrypts the randomizer by using the public key of the second device.

In this case, the key processing unit 23 decrypts the encryption result by using the private key of the second device, to obtain the randomizer; and generates the first shared key by using the information agreed by the first device and the second device and the randomizer.

In the fourth manner, the information receiving unit 22 receives an encryption result that is obtained after the first device encrypts a public key of the first device by using the public key of the second device.

In this case, the key processing unit 23 decrypts the encryption result by using the private key of the second device, to obtain the public key of the first device; generates a password; uses the password as the first shared key; and encrypts the password by using the public key of the first device, and then sends an encryption result to the first device, so that the first device decrypts the received encryption result by using a private key of the first device and then uses the obtained password as the first shared key.

In the fifth manner, the information receiving unit 22 receives a public key of the first device that is sent by the first device after the first device generates the first shared key according to a key exchange algorithm and by using the public key of the second device and a private key of the first device, where the key exchange algorithm is pre-agreed by the first device and the second device.

In this case, the key processing unit 23 generates the first shared key according to the key exchange algorithm by using the private key of the second device and the public key of the first device.

In such a manner, a parameter used by the key exchange algorithm may be pre-configured in the key processing unit 23; or the information receiving unit 22 receives a parameter used by the key exchange algorithm and sent by the configuration device, and provides the parameter for the key processing unit 23.

Further, the key configuration apparatus may further include a secure connection unit 24.

The secure connection unit 24 receives an encryption result sent by the first device, where the encryption result is obtained after the first device obtains the first shared key, generates a credential, and then encrypts the credential by using the first shared key or a derivation key of the first shared key; and decrypts the encryption result by using the obtained first shared key or the derivation key of the first shared key, to obtain the credential, where the credential is used for a secure connection between the first device and the second device (this implementation is shown in the figure). Alternatively, the secure connection unit 24 is configured to generate a credential after the key processing unit 23 obtains the first shared key; encrypt the credential by using the first shared key or the derivation key of the first shared key, and then send an encryption result to the first device, so that the first device decrypts the encryption result by using the obtained first shared key or the derivation key of the first shared key, to obtain the credential, where the credential is used for a secure connection between the first device and the second device.

To improve efficiency of discovering the second device by the first device, the information providing unit 21 may further provide channel information of the second device for the configuration device, so that the configuration device sends the channel information of the second device to the first device, and then the first device rapidly discovers the second device according to the channel information of the second device, so as to perform an operation of sending information for obtaining a first shared key to the second device.

Specifically, the information providing unit 21 may provide information for the configuration device by using a two-dimensional code or a USB, or by means of near field communication.

In addition, to further improve security, the information receiving unit 22 may further receive a verification value that is generated by the first device by using the public key of the second device.

In this case, the key processing unit 23 verifies the received verification value by using the public key of the second device, and performs, in a case in which verification succeeds, an operation of generating the first shared key.

In consideration of a hardware structure, the foregoing configuration device, as shown in FIG. 12, includes a processor, a memory, and a communications bus. The processor is connected to the memory by using the communications bus, and the memory stores instructions for implementing a key configuration method. Further, the configuration device further includes a communications interface, and is in a communication connection with another device by using the communications interface.

When the processor invokes the instructions for implementing a key configuration method in the memory, the following steps may be performed:
acquiring a public key of a second device, and sending the public key of the second device to a first device,
so that the first device sends information for obtaining a first shared key to the second device by using the public key of the second device; or so that the first device generates a first shared key by using the public key of the second device, and sends information for obtaining the first shared key to the second device; and
so that the second device generates the first shared key by using a private key of the second device and the information for obtaining the first shared key, where the first shared key is used for a secure connection between the first device and the second device.

When the processor invokes the instructions for implementing a key configuration method in the memory, steps performed by the configuration device in the foregoing method embodiments may be performed. For details, reference may be made to the foregoing method embodiments, and details are not described herein again.

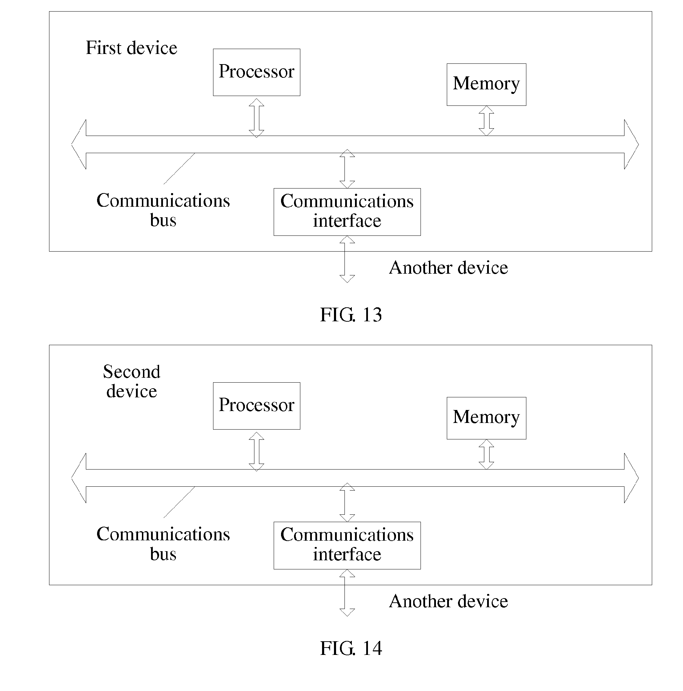

The foregoing first device, as shown in FIG. 13, includes a processor, a memory, and a communications bus. The processor is connected to the memory by using the communications bus, and the memory stores instructions for implementing a key configuration method. Further, the first device further includes a communications interface, and is in a communication connection with another device by using the communications interface.

When the processor invokes the instructions for implementing a key configuration method in the memory, the following steps may be performed:
receiving a public key of a second device that is sent by a configuration device after the configuration device acquires the public key of the second device; and sending information for obtaining a first shared key to the second device by using the public key of the second device; or generating, by the first device, a first shared key by using the public key of the second device and sending information for obtaining the first shared key to the second device,
so that the second device generates the first shared key by using a private key of the second device and the information for obtaining the first shared key, where the first shared key is used for a secure connection between the first device and the second device.

When the processor invokes the instructions for implementing a key configuration method in the memory, steps performed by the first device in the foregoing method embodiments may be performed. For details, reference may be made to the foregoing method embodiments, and details are not described herein again.

The foregoing second device, as shown in FIG. 14, includes a processor, a memory, and a communications bus. The processor is connected to the memory by using the communications bus, and the memory stores instructions for implementing a key configuration method. Further, the second device further includes a communications interface, and is in a communication connection with another device by using the communications interface.

When the processor invokes the instructions for implementing a key configuration method in the memory, the following step may be performed:
generating a first shared key by using a private key of the second device and information for obtaining the first shared key, where the first shared key is used for a secure connection between the first device and the second device.

When the processor invokes the instructions for implementing a key configuration method in the memory, steps performed by the second device in the foregoing method embodiments may be performed. For details, reference may be made to the foregoing method embodiments, and details are not described herein again.

The devices described in the present invention all structurally include some basic components, such as a communications bus, a processing system, a storage system, one or more input/output systems, and a communications interface. The bus may include one or more wires, which are used to implement communication between the components of the devices. The processing system includes various types of processors or micro-processors that are used to execute instructions, and process a procedure or thread. The storage system may include a dynamic memory such as a random access memory (RAM) for storing dynamic information, a static memory such as a read-only memory (ROM) for storing static information, and a large-capacity memory including a magnetic or an optical recording medium and a corresponding drive. The input system is used by a user to enter information to a server or a terminal device, such as a keyboard, a mouse, a stylus, a voice recognition system, or a biometric system. For a headless device, the input system having a man-machine interaction function may also be excluded. The output system includes a display, a printer, a loudspeaker, an indicator, and the like for information output. The communications interface is used for communication between a server or a terminal device and another system or a system. The communications interface may be connected to a network in a wired manner, a wireless manner, or an optical manner.

Each device includes operating system software for managing system resources and controlling operation of other programs, and application software for implementing a specified function.

The foregoing descriptions are merely exemplary embodiments of the present invention, but are not intended to limit the present invention. Any modification, equivalent replacement, or improvement made without departing from the spirit and principle of the present invention should fall within the protection scope of the present invention.

## Claims

1. A key configuration method, wherein the key configuration method comprises:
receiving, by a first device, a public key of a second device that is sent by a configuration device after the configuration device acquires the public key of the second device; and sending information for obtaining a first shared key to the second device by using the public key of the second device, or generating, by the first device, a first shared key by using the public key of the second device, and sending information for obtaining the first shared key to the second device,
so that the second device generates the first shared key by using a private key of the second device and the information for obtaining the first shared key, wherein the first shared key is used for a secure connection between the first device and the second device.

2. The method according to claim 1, wherein the sending, by the first device by using the public key of the second device, information for obtaining a first shared key to the second device comprises: generating, by the first device, a password; using the password as the first shared key; encrypting the password by using the public key of the second device, to obtain an encryption result; and sending the encryption result to the second device; and
the generating, by the second device, the first shared key by using a private key of the second device and the information for obtaining the first shared key comprises: decrypting, by the second device, the encryption result by using the private key of the second device, to obtain the password, and using the password as the first shared key; or
the generating, by the first device, a first shared key, and sending information for obtaining the first shared key to the second device by using the public key of the second device comprises: generating, by the first device, a password; encrypting the password by using the public key of the second device, to obtain an encryption result; sending the encryption result to the second device; generating a derivation key for the password by using a key derivation algorithm; and using the derivation key as the first shared key; and
the generating, by the second device, the first shared key by using a private key of the second device and the information for obtaining the first shared key comprises: decrypting, by the second device, the encryption result by using the private key of the second device, to obtain the password; generating the derivation key for the password by using the key derivation algorithm; and using the derivation key as the first shared key.

3. The method according to claim 1, wherein the generating, by the first device, a first shared key, and sending information for obtaining the first shared key to the second device by using the public key of the second device comprises: generating, by the first device, a randomizer; generating the first shared key by using information agreed by the first device and the second device and the randomizer; encrypting the randomizer by using the public key of the second device, and then sending an encryption result to the second device; and
the generating, by the second device, the first shared key by using a private key of the second device and the information for obtaining the first shared key comprises: decrypting, by the second device, the encryption result by using the private key of the second device, to obtain the randomizer; and generating the first shared key by using the information agreed by the first device and the second device and the randomizer.

4. The method according to claim 1, wherein the sending information for obtaining the first shared key to the second device by using the public key of the second device comprises: encrypting, by the first device, a public key of the first device by using the public key of the second device, and then sending an encryption result to the second device;
the generating, by the second device, the first shared key by using a private key of the second device and the information for obtaining the first shared key comprises: decrypting, by the second device, the encryption result by using the private key of the second device, to obtain the public key of the first device; generating a password; and using the password as the first shared key; and
the method further comprises: receiving, by the first device, an encryption result that is obtained after the second device encrypts the password by using the public key of the first device; decrypting the received encryption result by using a private key of the first device; and using an obtained password as the first shared key.

5. The method according to claim 1, wherein the method further comprises: pre-agreeing, by the first device and the second device, a key exchange algorithm;
the generating, by the first device, a first shared key by using the public key of the second device, and sending information for obtaining the first shared key to the second device comprises:
generating, by the first device, the first shared key according to the key exchange algorithm by using the public key of the second device and a private key of the first device; and sending a public key of the first device to the second device; and
the generating, by the second device, the first shared key by using a private key of the second device and the information for obtaining the first shared key comprises: generating, by the second device, the first shared key according to the key exchange algorithm by using the private key of the second device and the public key of the first device.

6. The method according to claim 5, wherein the pre-agreeing, by the first device and the second device, a key exchange algorithm comprises:
pre-configuring, in the first device and the second device, a parameter used by the key exchange algorithm; or
sending, by the configuration device, a parameter used by the key exchange algorithm to the first device and the second device.

7. The method according to any one of claims 1 to 6, wherein the first shared key being used for a secure connection between the first device and the second device comprises:
generating, by the first device, a credential after obtaining the first shared key; encrypting the credential by using the first shared key or the derivation key of the first shared key, and then sending an encryption result to the second device, so that the second device decrypts the encryption result by using the obtained first shared key or the derivation key of the first shared key, to obtain the credential, wherein the credential is used for a secure connection between the first device and the second device; or
decrypting, by the first device, an encryption result, sent by the second device, of a credential by using the obtained first shared key or the derivation key of the first shared key, to obtain the credential, wherein the encryption result of the credential is obtained after the second device obtains the first shared key, generates the credential, and then encrypts the credential by using the first shared key or the derivation key of the first shared key, wherein the credential is used for a secure connection between the first device and the second device.

8. The method according to claim 7, wherein if the first device is a registrar Registrar, a central node, or a group owner GO, the first device generates the credential and sends the encryption result of the credential to the second device; or
if the second device is a Registrar, a central node, or a GO, the second device generates the credential and sends the encryption result of the credential to the first device.

9. The method according to any one of claims 1 to 8, wherein
the receiving, by a first device, a public key of a second device that is sent by a configuration device after the configuration device acquires the public key of the second device is specifically:
receiving, by the first device, an encryption result that is sent by the configuration device after the configuration device acquires the public key of the second device and the public key of the first device, wherein the encryption result is obtained after the configuration device encrypts the public key of the second device by using the public key of the first device; and
the method further comprises: decrypting, by the first device, the encryption result, to obtain the public key of the second device.

10. The method according to any one of claims 1 to 8, wherein
the receiving, by a first device, a public key of a second device that is sent by a configuration device after the configuration device acquires the public key of the second device is specifically:
establishing, by the first device, a secure connection to the configuration device, so as to generate a second shared key; and
receiving, by the first device, an encryption result that is sent by the configuration device after the configuration device acquires the public key of the second device, wherein the encryption result is obtained after the configuration device encrypts the public key of the second device by using the second shared key; and
the method further comprises:
decrypting, by the first device, the received encryption result by using the second shared key, to obtain the public key of the second device.

11. The method according to claim 10, wherein the establishing, by the first device, a secure connection to the configuration device, so as to generate a second shared key comprises:
securely establishing, by the first device, a WPS interaction manner with the configuration device by means of wireless fidelity to share a credential, and using the credential as the second shared key; or
receiving, by the first device, a public key of the configuration device that is sent by the configuration device; and generating, by the first device, the second shared key according to a pre-agreed key exchange algorithm by using the public key of the configuration device and the private key of the first device, so that the configuration device generates, after acquiring the public key of the first device, the second shared key according to the pre-agreed key exchange algorithm by using the public key of the first device and a private key of the configuration device.

12. The method according to claim 5, wherein after the obtaining, by the first device, the public key of the second device, the method further comprises: generating, by the first device, a new public key and a new private key; and
the public key of the first device that is sent by the first device to the second device is the new public key; the public key of the first device that is used by the second device to generate the first shared key is the new public key; and the private key of the first device that is used by the first device to generate the first shared key is the new private key.

13. The method according to any one of claims 1 to 12, wherein
the first device is an enrollee enrollee, and the second device is a registrar; or the first device is a client client, and the second device is a GO; or the first device is a wireless terminal, and the second device is an access point; or the first device is a central node, and the second device is a sensor node.

14. The method according to any one of claims 1 to 13, wherein
the method further comprises: rapidly discovering, by the first device, the second device according to channel information of the second device, so as to perform the step of sending information for obtaining a first shared key to the second device, wherein the channel information of the second device is acquired by the configuration device from the second device and then sent to the first device

15. The method according to any one of claims 1 to 14, wherein the configuration device acquires information from the first device or the second device by scanning a two-dimensional code, by using a universal serial bus USB, or by means of near field communication.

16. The method according to any one of claims 1 to 15, wherein the method further comprises:
generating, by the first device, a verification value by using the public key of the second device, and
sending the verification value to the second device,
so that the second device verifies, before generating the first shared key, the received verification value by using the public key of the second device, and performs, in a case in which verification succeeds, the step of generating the first shared key.

17. A key configuration method, wherein the key configuration method comprises:
acquiring, by the configuration device, a public key of a second device, and sending the public key of the second device to a first device,
so that the first device sends information for obtaining a first shared key to the second device by using the public key of the second device; or so that the first device generates a first shared key by using the public key of the second device, and sends information for obtaining the first shared key to the second device; and
so that the second device generates the first shared key by using a private key of the second device and the information for obtaining the first shared key, wherein the first shared key is used for a secure connection between the first device and the second device.

18. The method according to claim 17, wherein the sending, by the first device by using the public key of the second device, information for obtaining a first shared key to the second device comprises: generating, by the first device, a password; using the password as the first shared key; encrypting the password by using the public key of the second device, to obtain an encryption result; and sending the encryption result to the second device; and
the generating, by the second device, the first shared key by using a private key of the second device and the information for obtaining the first shared key comprises: decrypting, by the second device, the encryption result by using the private key of the second device, to obtain the password, and using the password as the first shared key; or
the generating, by the first device, a first shared key, and sending information for obtaining the first shared key to the second device by using the public key of the second device comprises: generating, by the first device, a password; encrypting the password by using the public key of the second device, to obtain an encryption result; sending the encryption result to the second device; generating a derivation key for the password by using a key derivation algorithm; and using the derivation key as the first shared key; and
the generating, by the second device, the first shared key by using a private key of the second device and the information for obtaining the first shared key comprises: decrypting, by the second device, the encryption result by using the private key of the second device, to obtain the password; generating the derivation key for the password by using the key derivation algorithm; and using the derivation key as the first shared key.

19. The method according to claim 17, wherein the generating, by the first device, a first shared key, and sending information for obtaining the first shared key to the second device by using the public key of the second device comprises: generating, by the first device, a randomizer; generating the first shared key by using information agreed by the first device and the second device and the randomizer; encrypting the randomizer by using the public key of the second device, and then sending an encryption result to the second device; and
the generating, by the second device, the first shared key by using a private key of the second device and the information for obtaining the first shared key comprises: decrypting, by the second device, the encryption result by using the private key of the second device, to obtain the randomizer; and generating the first shared key by using the information agreed by the first device and the second device and the randomizer.

20. The method according to claim 17, wherein the sending information for obtaining the first shared key to the second device by using the public key of the second device comprises: encrypting, by the first device, a public key of the first device by using the public key of the second device, and then sending an encryption result to the second device; and
the generating, by the second device, the first shared key by using a private key of the second device and the information for obtaining the first shared key comprises: decrypting, by the second device, the encryption result by using the private key of the second device, to obtain the public key of the first device; generating a password; and encrypting the password and then sending an encryption result to the first device,
so that the first device decrypts, by using a private key of the first device, the encryption result that is received, and then uses an obtained password as the first shared key.

21. The method according to claim 17, wherein the method further comprises: pre-agreeing, by the first device and the second device, a key exchange algorithm;
the generating, by the first device, a first shared key by using the public key of the second device, and sending information for obtaining the first shared key to the second device comprises:
generating, by the first device, the first shared key according to the key exchange algorithm by using the public key of the second device and a private key of the first device; and sending a public key of the first device to the second device; and
the generating, by the second device, the first shared key by using a private key of the second device and the information for obtaining the first shared key comprises: generating, by the second device, the first shared key according to the key exchange algorithm by using the private key of the second device and the public key of the first device.

22. The method according to claim 21, wherein the pre-agreeing, by the first device and the second device, a key exchange algorithm comprises:
pre-configuring, in the first device and the second device, a parameter used by the key exchange algorithm; or
sending, by the configuration device, a parameter used by the key exchange algorithm to the first device and the second device.

23. The method according to any one of claims 17 to 22, wherein the method further comprises:
acquiring, by the configuration device, the public key of the first device; and
the sending, by the configuration device, the public key of the second device to the first device comprises: encrypting, by the configuration device, the public key of the second device by using the public key of the first device, and sending an encryption result to the first device, so that the first device decrypts the encryption result, to obtain the public key of the second device.

24. The method according to any one of claims 17 to 22, wherein the method further comprises:
establishing, by the configuration device, a secure connection to the first device, so as to generate a second shared key; and
the sending the public key of the second device to the first device comprises: encrypting, by the configuration device, the public key of the second device by using the second shared key, and then sending an encryption result to the first device, so that the first device decrypts, by using the second shared key, the encryption result that is received, to obtain the public key of the second device.

25. The method according to claim 24, wherein the establishing, by the configuration device, a secure connection to the first device, so as to generate a second shared key comprises:
sharing, by the configuration device, a credential with the first device in a WPS interaction manner, and using the credential as the second shared key; or
sending, by the configuration device, a public key of the configuration device to the first device, so that the configuration device generates the second shared key according to a pre-agreed key exchange algorithm by using the public key of the first device and the private key of the configuration device, and the first device generates the second shared key according to the pre-agreed key exchange algorithm by using the public key of the configuration device and the private key of the first device.

26. The method according to any one of claims 17 to 25, wherein
the first device is an enrollee enrollee, and the second device is a registrar; or the first device is a client client, and the second device is a GO; or the first device is a wireless terminal, and the second device is an access point; or the first device is a central node, and the second device is a sensor node.

27. The method according to any one of claims 17 to 26, wherein the method further comprises:
acquiring, by the configuration device, channel information of the second device and sending the channel information to the first device, so that the first device rapidly discovers the second device according to the channel information of the second device, so as to perform the step of sending information for obtaining a first shared key to the second device.

28. The method according to any one of claims 17 to 27, wherein the configuration device acquires information from the first device or the second device by scanning a two-dimensional code, by using a universal serial bus USB, or by means of near field communication.

29. A key configuration method, wherein the method comprises:
providing, by a second device, a public key of the second device for a configuration device, so that the configuration device sends the public key of the second device to a first device;
receiving, by the second device, information that is used for obtaining a first shared key and that is sent by the first device by using the public key of the second device; or receiving information that is used for obtaining a first shared key and that is sent by the first device after the first device generates the first shared key by using the public key of the second device; and
generating, by the second device, the first shared key by using a private key of the second device and the information for obtaining the first shared key, wherein the first shared key is used for a secure connection between the first device and the second device.

30. The method according to claim 29, wherein the receiving, by the second device, information that is used for obtaining a first shared key and that is sent by the first device by using the public key of the second device comprises: receiving, by the second device, an encryption result sent by the first device, wherein the encryption result is obtained after the first device generates a password, uses the password as the first shared key, and then encrypts the password by using the public key of the second device; and
the generating, by the second device, the first shared key by using a private key of the second device and the information for obtaining the first shared key comprises: decrypting, by the second device, the encryption result by using the private key of the second device, to obtain the password, and using the password as the first shared key; or
the receiving, by the second device, information that is used for obtaining a first shared key and that is sent by the first device by using the public key of the second device comprises: receiving, by the second device, an encryption result sent by the first device, wherein the encryption result is obtained after the first device generates a password and then encrypts the password by using the public key of the second device; and
the generating, by the second device, the first shared key by using a private key of the second device and the information for obtaining the first shared key comprises: decrypting, by the second device, the encryption result by using the private key of the second device, to obtain the password; generating a derivation key for the password by using the key derivation algorithm; and using the derivation key as the first shared key.

31. The method according to claim 29, wherein the receiving, by the second device, information that is used for obtaining a first shared key and that is sent by the first device by using the public key of the second device comprises: receiving, by the second device, an encryption result sent by the first device, wherein the encryption result is obtained after the first device generates a randomizer and then encrypts the randomizer by using the public key of the second device, and the first device generates the first shared key by using information agreed by the first device and the second device and the randomizer; and
the generating, by the second device, the first shared key by using a private key of the second device and the information for obtaining the first shared key comprises: decrypting, by the second device, the encryption result by using the private key of the second device, to obtain the randomizer; and generating the first shared key by using the information agreed by the first device and the second device and the randomizer.

32. The method according to claim 29, wherein the receiving, by the second device, information that is used for obtaining a first shared key and that is sent by the first device by using the public key of the second device comprises: receiving, by the second device, an encryption result that is obtained after the first device encrypts a public key of the first device by using the public key of the second device; and
the generating, by the second device, the first shared key by using a private key of the second device and the information for obtaining the first shared key comprises: decrypting, by the second device, the encryption result by using the private key of the second device, to obtain the public key of the first device; generating a password; using the password as the first shared password; and encrypting the password by using the public key of the first device, and then sending an encryption result to the first device,
so that the first device decrypts, by using a private key of the first device, the encryption result that is received, and then uses an obtained password as the first shared key.

33. The method according to claim 29, wherein the method further comprises: pre-agreeing, by the second device and the first device, a key exchange algorithm;
the receiving information that is used for obtaining a first shared key and that is sent by the first device after the first device generates the first shared key by using the public key of the second device comprises: receiving, by the second device, a public key of the first device that is sent by the first device after the first device generates the first shared key according to the key exchange algorithm by using the public key of the second device and a private key of the first device; and
the generating, by the second device, the first shared key by using a private key of the second device and the information for obtaining the first shared key comprises: generating, by the second device, the first shared key according to the key exchange algorithm by using the private key of the second device and the public key of the first device.

34. The method according to claim 33, wherein the pre-agreeing, by the second device and the first device, a key exchange algorithm comprises:
pre-configuring, in the second device and the first device, a parameter used by the key exchange algorithm; or
receiving, by the second device and the first device, a parameter used by the key exchange algorithm and sent by the configuration device.

35. The method according to any one of claims 29 to 34, wherein the first shared key being used for a secure connection between the first device and the second device comprises:
receiving, by the second device, an encryption result sent by the first device, wherein the encryption result is obtained after the first device obtains the first shared key, generates a credential, and then encrypts the credential by using the first shared key or the derivation key of the first shared key; and decrypting, by the second device, the encryption result by using the obtained first shared key or the derivation key of the first shared key, to obtain the credential, wherein the credential is used for a secure connection between the first device and the second device; or
generating, by the second device, a credential after obtaining the first shared key; encrypting the credential by using the first shared key or a derivation key of the first shared key, and then sending an encryption result to the first device, so that the first device decrypts the encryption result by using the obtained first shared key or the derivation key of the first shared key, to obtain the credential, wherein the credential is used for a secure connection between the first device and the second device.

36. The method according to claim 35, wherein if the first device is a registrar Registrar, a central node, or a group owner GO, the first device generates the credential and sends the encryption result of the credential to the second device; or
if the second device is a Registrar, a central node, or a GO, the second device generates the credential and sends the encryption result of the credential to the first device.

37. The method according to any one of claims 29 to 36, wherein the method further comprises:
providing, by the second device, channel information of the second device for the configuration device, so that the configuration device sends the channel information of the second device to the first device, and then the first device rapidly discovers the second device according to the channel information of the second device, so as to perform the step of sending information for obtaining a first shared key to the second device.

38. The method according to any one of claims 29 to 37, wherein the configuration device acquires information from the second device or the first device by using a two-dimensional code or a USB, or by means of near field communication.

39. The method according to any one of claims 29 to 38, wherein the method further comprises:
receiving, by the second device, a verification value that is generated by the first device by using the public key of the second device; verifying, by the second device, the received verification value by using the public key of the second device; and performing, in a case in which verification succeeds, the step of generating the first shared key.

40. A key configuration apparatus, disposed in a first device, wherein the key configuration apparatus comprises:
a configuration receiving unit, configured to receive a public key of a second device that is sent by a configuration device after the configuration device acquires the public key of the second device; and
a key processing unit, configured to send, by using the public key of the second device, information for obtaining a first shared key to the second device, or generate a first shared key by using the public key of the second device, and send information for obtaining the first shared key to the second device, so that the second device generates the first shared key by using a private key of the second device and the information for obtaining the first shared key, wherein the first shared key is used for a secure connection between the first device and the second device.

41. The key configuration apparatus according to claim 40, wherein the key processing unit is specifically configured to generate a password, and use the password as the first shared key; encrypt the password by using the public key of the second device, to obtain an encryption result; and send the encryption result to the second device, so that the second device decrypts the encryption result by using the private key of the second device, to obtain the password, and uses the password as the first shared key; or
the key processing unit is specifically configured to generate a password, and encrypt the password by using the public key of the second device, to obtain an encryption result; send the encryption result to the second device; generate a derivation key for the password by using a key derivation algorithm; and use the derivation key as the first shared key, so that the second device decrypts the encryption result by using the private key of the second device, to obtain the password, generates the derivation key for the password by using the key derivation algorithm, and uses the derivation key as the first shared key.

42. The key configuration apparatus according to claim 40, wherein the key processing unit is specifically configured to generate a randomizer; generate the first shared key by using information agreed by the first device and the second device and the randomizer; encrypt the randomizer by using the public key of the second device, and then send an encryption result to the second device, so that the second device decrypts the encryption result by using the private key of the second device, to obtain the randomizer, and generates the first shared key by using the information agreed by the first device and the second device and the randomizer.

43. The key configuration apparatus according to claim 40, wherein the key processing unit is specifically configured to encrypt a public key of the first device by using the public key of the second device, and then send an encryption result to the second device; receive an encryption result sent by the second device, wherein the encryption result is obtained after the second device decrypts the received encryption result by using the private key of the second device, to obtain the public key of the first device, generates a password, uses the password as the first shared key, and then encrypts the password by using the public key of the first device; and decrypt the received encryption result by using a private key of the first device, and then use the obtained password as the first shared key.

44. The key configuration apparatus according to claim 40, wherein the key processing unit is specifically configured to generate, by using the public key of the second device and a private key of the first device, the first shared key according to a key exchange algorithm pre-agreed by the first device and the second device; and send a public key of the first device to the second device, so that the second device generates the first shared key according to the key exchange algorithm by using the private key of the second device and the public key of the first device.

45. The key configuration apparatus according to claim 44, wherein a parameter used by the key exchange algorithm is pre-configured in the key processing unit; or
the configuration receiving unit is further configured to receive a parameter used by the key exchange algorithm and sent by the configuration device, and provide the parameter for the key processing unit.

46. The key configuration apparatus according to any one of claims 40 to 45, wherein the key configuration apparatus further comprises:
a secure connection unit, configured to generate a credential after the key processing unit obtains the first shared key; encrypt the credential by using the first shared key or the derivation key of the first shared key, and then send an encryption result to the second device, so that the second device decrypts the encryption result by using the obtained first shared key or the derivation key of the first shared key, to obtain the credential, wherein the credential is used for a secure connection between the first device and the second device; or decrypt an encryption result, sent by the second device, of a credential by using the obtained first shared key or the derivation key of the first shared key, to obtain the credential, wherein the encryption result of the credential is obtained after the second device obtains the first shared key, generates the credential, and then encrypts the credential by using the first shared key or the derivation key of the first shared key, wherein the credential is used for a secure connection between the first device and the second device.

47. The key configuration apparatus according to any one of claims 40 to 46, wherein the configuration receiving unit is specifically configured to receive an encryption result that is sent by the configuration device after the configuration device acquires the public key of the second device and the public key of the first device, wherein the encryption result is obtained after the configuration device encrypts the public key of the second device by using the public key of the first device; and
the key processing unit is further configured to decrypt the encryption result, to obtain the public key of the second device.

48. The key configuration apparatus according to any one of claims 40 to 46, wherein the configuration receiving unit is specifically configured to establish a secure connection with the configuration device, so as to generate a second shared key; and receive an encryption result that is sent by the configuration device after the configuration device acquires the public key of the second device, wherein the encryption result is obtained after the configuration device encrypts the public key of the second device by using the second shared key; and
the key processing unit is further configured to decrypt the received encryption result by using the second shared key, to obtain the public key of the second device.

49. The key configuration apparatus according to claim 48, wherein when establishing a secure connection with the configuration device so as to generate the second shared key, specifically, the configuration receiving unit securely establishes a WPS interaction manner with the configuration device by means of wireless fidelity to share a credential, and uses the credential as the second shared key; or specifically receives a public key of the configuration device that is sent by the configuration device, so that the first device generates the second shared key according to the pre-agreed key exchange algorithm by using the public key of the configuration device and the private key of the first device.

50. The key configuration apparatus according to claim 44, wherein the key processing unit is further configured to generate, after obtaining the public key of the second device, a new public key and a new private key; and
the public key of the first device that is sent by the first device to the second device is the new public key; the public key of the first device that is used by the second device to generate the first shared key is the new public key; and the private key of the first device that is used by the first device to generate the first shared key is the new private key.

51. The key configuration apparatus according to any one of claims 40 to 50, wherein the first device is an enrollee enrollee, and the second device is a registrar; or the first device is a client client, and the second device is a GO; or the first device is a wireless terminal, and the second device is an access point; or the first device is a central node, and the second device is a sensor node.

52. The key configuration apparatus according to any one of claims 40 to 51, wherein the configuration receiving unit is further configured to receive channel information of the second device that is acquired from the second device and then sent by the configuration device; and
the key processing unit rapidly discovers the second device according to the channel information of the second device, so as to perform the operation of sending information for obtaining a first shared key to the second device.

53. The key configuration apparatus according to any one of claims 40 to 52, wherein the key processing unit is further configured to generate a verification value by using the public key of the second device, and send the verification value to the second device, so that the second device verifies, before generating the first shared key, the received verification value by using the public key of the second device, and performs, in a case in which verification succeeds, an operation of generating the first shared key.

54. A key configuration apparatus, disposed in a configuration device, wherein the key configuration apparatus comprises:
an information acquiring unit, configured to acquire a public key of a second device; and
an information sending unit, configured to send the public key of the second device to a first device,
so that the first device sends information for obtaining a first shared key to the second device by using the public key of the second device; or so that the first device generates a first shared key by using the public key of the second device, and sends information for obtaining the first shared key to the second device; and
so that the second device generates the first shared key by using a private key of the second device and the information for obtaining the first shared key, wherein the first shared key is used for a secure connection between the first device and the second device.

55. The key configuration apparatus according to claim 54, wherein the information sending unit is further configured to send a parameter used by a key exchange algorithm to the first device and the second device, wherein the key exchange algorithm is used to enable the first device to generate the first shared key according to the key exchange algorithm by using a private key of the first device and the public key of the second device, and enable the second device to generate the first shared key according to the key exchange algorithm by using the private key of the second device and a public key of the first device.

56. The key configuration apparatus according to claim 54 or 55, wherein the information acquiring unit is further configured to acquire the public key of the first device; and
the information sending unit is specifically configured to encrypt the public key of the second device by using the public key of the first device, and send an encryption result to the first device, so that the first device decrypts the encryption result, to obtain the public key of the second device.

57. The key configuration apparatus according to claim 54 or 55, wherein the information sending unit is further configured to establish a secure connection to the first device, so as to generate a second shared key; and when sending the public key of the second device to the first device, the information sending unit specifically encrypts the public key of the second device by using the second shared key, and sends an encryption result to the first device, so that the first device decrypts the received encryption result by using the second shared key, to obtain the public key of the second device.

58. The key configuration apparatus according to claim 57, wherein when establishing a secure connection to the first device so as to generate the second shared key, the information sending unit is specifically configured to share a credential with the first device in a WPS interaction manner, and use the credential as the second shared key; or send a public key of the configuration device to the first device, and generate the second shared key according to a pre-agreed key exchange algorithm and by using the public key of the first device and a private key of the configuration device.

59. The key configuration apparatus according to any one of claims 54 to 58, wherein the information acquiring unit is further configured to acquire channel information of the second device; and
the information sending unit is further configured to send the channel information of the second device to the first device, so that the first device rapidly discovers the second device according to the channel information of the second device, so as to perform the operation of sending information for obtaining a first shared key to the second device.

60. The key configuration apparatus according to any one of claims 54 to 59, wherein the information acquiring unit is specifically configured to acquire information from the first device or the second device by scanning a two-dimensional code, by using a universal serial bus USB, or by means of near field communication.

61. A key configuration apparatus, disposed in a second device, wherein the key configuration apparatus comprises:
an information providing unit, configured to provide a public key of the second device to a configuration device, so that the configuration device sends the public key of the second device to a first device;
an information receiving unit, configured to receive information that is used for obtaining a first shared key and that is sent by the first device by using the public key of the second device; or receive information that is used for obtaining a first shared key and that is sent by the first device after the first device generates the first shared key by using the public key of the second device; and
a key generation unit, configured to generate the first shared key by using a private key of the second device and the information for obtaining the first shared key, wherein the first shared key is used for a secure connection between the first device and the second device.

62. The key configuration apparatus according to claim 61, wherein the information receiving unit is specifically configured to receive an encryption result sent by the first device, wherein the encryption result is obtained after the first device generates a password, uses the password as the first shared key, and encrypts the password by using the public key of the second device; and
the key processing unit is specifically configured to decrypt the encryption result by using the private key of the second device, to obtain the password, and use the password as the first shared key; or
the information receiving unit is specifically configured to receive an encryption result sent by the first device, wherein the encryption result is obtained after the first device generates a password and encrypts the password by using the public key of the second device; and
the key processing unit is specifically configured to decrypt the encryption result by using the private key of the second device, to obtain the password; generate a derivation key for the password by using the key derivation algorithm; and use the derivation key as the first shared key.

63. The key configuration apparatus according to claim 61, wherein the information receiving unit is specifically configured to receive an encryption result sent by the first device, wherein the encryption result is obtained after the first device generates a randomizer and encrypts the randomizer by using the public key of the second device, wherein the first device generates the first shared key by using information agreed by the first device and the second device and the randomizer; and
the key processing unit is specifically configured to decrypt the encryption result by using the private key of the second device, to obtain the randomizer; and generate the first shared key by using the information agreed by the first device and the second device and the randomizer.

64. The key configuration apparatus according to claim 61, wherein the information receiving unit is specifically configured to receive an encryption result that is obtained after the first device encrypts a public key of the first device by using the public key of the second device; and
the key processing unit is specifically configured to decrypt the encryption result by using the private key of the second device, to obtain the public key of the first device; generate a password; use the password as the first shared key; and encrypt the password by using the public key of the first device, and then send an encryption result to the first device, so that the first device decrypts the received encryption result by using a private key of the first device and then uses the obtained password as the first shared key.

65. The key configuration apparatus according to claim 61, wherein the information receiving unit is specifically configured to receive a public key of the first device that is sent by the first device after the first device generates the first shared key according to a key exchange algorithm by using the public key of the second device and a private key of the first device, wherein the key exchange algorithm is pre-agreed by the first device and the second device; and
the key processing unit is specifically configured to generate the first shared key according to the key exchange algorithm by using the private key of the second device and the public key of the first device.

66. The key configuration apparatus according to claim 65, wherein a parameter used by the key exchange algorithm is pre-configured in the key processing unit; or
the information receiving unit is further configured to receive a parameter used by the key exchange algorithm and sent by the configuration device, and provide the parameter for the key processing unit.

67. The key configuration apparatus according to any one of claims 61 to 66, wherein the key configuration apparatus further comprises:
a secure connection unit, configured to receive an encryption result sent by the first device, wherein the encryption result is obtained after the first device obtains the first shared key, generates a credential, and then encrypts the credential by using the first shared key or the derivation key of the first shared key; and decrypt the encryption result by using the obtained first shared key or the derivation key of the first shared key, to obtain the credential, wherein the credential is used for a secure connection between the first device and the second device; or
generate a credential after the key processing unit obtains the first shared key; encrypt the credential by using the first shared key or the derivation key of the first shared key, and then send an encryption result to the first device, so that the first device decrypts the encryption result by using the obtained first shared key or the derivation key of the first shared key, to obtain the credential, wherein the credential is used for a secure connection between the first device and the second device.

68. The key configuration apparatus according to any one of claims 61 to 67, wherein the information providing unit is further configured to provide channel information of the second device for the configuration device, so that the configuration device sends the channel information of the second device to the first device, and then the first device rapidly discovers the second device according to the channel information of the second device, so as to perform the operation of sending information for obtaining a first shared key to the second device.

69. The key configuration apparatus according to any one of claims 61 to 68, wherein the information providing unit is specifically configured to provide, by using a two-dimensional code or a USB, or by means of near field communication, information for the configuration device.

70. The key configuration apparatus according to any one of claims 61 to 68, wherein the information receiving unit is further configured to receive a verification value that is generated by the first device by using the public key of the second device; and
the key processing unit is further configured to verify the received verification value by using the public key of the second device, and perform, in a case in which verification succeeds, an operation of generating the first shared key.

71. A key configuration system, wherein the key configuration system comprises: the key configuration apparatus according to claim 40, the key configuration apparatus according to claim 54, and the key configuration apparatus according to claim 61; or
the key configuration apparatus according to claim 41, the key configuration apparatus according to claim 54, and the key configuration apparatus according to claim 62; or
the key configuration apparatus according to claim 42, the key configuration apparatus according to claim 54, and the key configuration apparatus according to claim 63; or
the key configuration apparatus according to claim 43, the key configuration apparatus according to claim 54, and the key configuration apparatus according to claim 64; or
the key configuration apparatus according to claim 44, the key configuration apparatus according to claim 54, and the key configuration apparatus according to claim 65; or
the key configuration apparatus according to claim 45, the key configuration apparatus according to claim 55, and the key configuration apparatus according to claim 66; or
the key configuration apparatus according to claim 46, the key configuration apparatus according to claim 54, and the key configuration apparatus according to claim 67; or
the key configuration apparatus according to claim 47, the key configuration apparatus according to claim 56, and the key configuration apparatus according to any one of claims 61 to 67; or
the key configuration apparatus according to claim 48, the key configuration apparatus according to claim 57, and the key configuration apparatus according to any one of claims 61 to 67; or
the key configuration apparatus according to claim 49, the key configuration apparatus according to claim 58, and the key configuration apparatus according to any one of claims 61 to 67; or
the key configuration apparatus according to claim 50, the key configuration apparatus according to claim 54, and the key configuration apparatus according to claim 65; or
the key configuration apparatus according to claim 51, the key configuration apparatus according to any one of claims 54 to 58, and the key configuration apparatus according to any one of claims 61 to 67; or
the key configuration apparatus according to claim 52, the key configuration apparatus according to claim 59, and the key configuration apparatus according to claim 68; or
the key configuration apparatus according to claim 53, the key configuration apparatus according to any one of claims 54 to 59, and the key configuration apparatus according to claim 70; or
the key configuration apparatus according to any one of claims 40 to 53, the key configuration apparatus according to claim 60, and the key configuration apparatus according to claim 69.
